(19) Europäisches Patentamt
European Patent Office
Office européen des brevets

(11) EP 4 105 259 A1

(12) EUROPEAN PATENT APPLICATION

(43) Date of publication:
**21.12.2022 Bulletin 2022/51**

(21) Application number: **21180239.2**

(22) Date of filing: **18.06.2021**

(51) International Patent Classification (IPC):
***C08G 63/672*** *(2006.01)* ***C08G 63/78*** *(2006.01)*
***C08G 63/664*** *(2006.01)*

(52) Cooperative Patent Classification (CPC):
**C08G 63/672; C08G 63/60; C08G 63/664; C08G 63/78; C08G 65/324**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **BASF SE**
**67056 Ludwigshafen am Rhein (DE)**

(72) Inventors:
- **MORMUL, Verena**
  **67056 Ludwigshafen (DE)**
- **OECHSLE, Peter**
  **67056 Ludwigshafen (DE)**
- **SCHADE, Christian**
  **67056 Ludwigshafen (DE)**
- **HUEFFNER, Stephan**
  **67056 Ludwigshafen (DE)**
- **WEISS, Thomas**
  **67056 Ludwigshafen (DE)**

(74) Representative: **BASF IP Association**
**BASF SE**
**GBI-C006**
**67056 Ludwigshafen (DE)**

(54) **POLYALKYLENE OXIDE ESTER POLYMER, ITS PREPARATION AND USE**

(57) A polyalkylene oxide ester polymer with a weight average molecular weight $M_w$ of 500 to 50 000 g/mol and a polydispersity PD of 2 to 6, comprising 10 to 560 ether groups and 2 to 51 ester groups, which are interconnected with alkylene groups, which is significantly better biodegradable than conventional polyalkylene oxide polymers, the preparation of such a polyalkylene oxide ester polymer and its use.

EP 4 105 259 A1

## Description

The present invention relates to a polyalkylene oxide ester polymer with a weight average molecular weight $M_w$ of 500 to 50 000 g/mol and a polydispersity PD of 2 to 6, comprising 10 to 560 ether groups and 2 to 51 ester groups, which are interconnected with alkylene groups, which is significantly better biodegradable than conventional polyalkylene oxide polymers.

Furthermore, the present invention also relates to a process for the preparation of such a polyalkylene oxide ester polymer and its use.

Polyalkylene oxides are important polymers with a wide range of applications. They are, inter alia, used as solvents, consistency enhancer, emulsifier, dispersants, protective colloids, plasticizers, release agents as well as ingredients or raw materials in the production of adhesives and diverse polymers such as graft polymers. Besides various technical applications, they are, for example, also used in a variety of consumer products such as in cosmetics or washing and cleaning agents.

However, a certain amount of such consumer products is rinsed away after their use and may, if not biodegradated or otherwise removed in the sewage treatment plant, end up as microplastics in the river or sea. It was recognized in the course of the invention that the biodegradability of polyalkylene oxides decreases in the range from a few hundred g/mol molecular weight up to a few thousand g/mol molecular weight.

Various countries have already introduced initiatives to ban microplastics especially in cosmetic products. Beyond this ban of insoluble microplastic there is an intense dialog on future requirements for soluble polymers used in consumer products. It is therefore highly desirable to identify better biodegradable ingredients for such applications. Even radically produced graft polymers with a polyethylene glycol backbone show only limited biodegradation in wastewater if the polyethylene glycol backbone is within the molecular weight range mentioned above, and particularly if the molecular weight is above a few thousands g/mol.

Whereas low molecular weight polyethylene oxide with $M_w$ of 600 g/mol is easily biodegradable, polyethylene oxide with $M_w$ of 6000 g/mol is only poorly biodegradable. BASF's safety data sheet for Pluriol® E 600, revised version 2.0, dated 05. January 2021, affirms for polyethylene glycol with $M_w$ = 600 g/mol a DOC value (dissolved organic carbon) measured according to OECD 301A of > 70%. In contrast to that, the biodegradability of polyethylene glycol with $M_w$ = 6000 g/mol is mentioned in BASF's safety data sheet for Pluriol® E 6000 Pellet, revised version 2.0, dated 10. August 2018, to be only poor, showing only 10-20% $CO_2$ formation relative to the theoretical value (60 d) according to OECD 301B.

The classical polyalkylene oxides contain polymer chains of oxyalkylene groups with OH groups at both ends. However, there are also known in the state of the art polyalkylene oxides with functionalized end groups, which show specific properties and allow specific application.

CN 110498915 A discloses the preparation of omega hydroxy alpha carboxy polyethylene oxide, in which an ester group functionalized hydroxy compound, such as methyl 2,2-dimethyl-3-hydroxypropionate, is polymerized with ethylene oxide to an omega hydroxy polyethylene oxide alpha ester intermediate product, which is then hydrolyzed to the respective omega hydroxy alpha carboxy polyethylene oxide. The COOH end group is mentioned to serve as a site for reacting with other molecules to form modified polyethylene oxides, e.g. for their use in biological or medical fields.

US 2,585,448 describes polyethylene oxides in which one or both of the OH end groups are esterified with an aromatic or aliphatic carboxylic acid. The mono- and di-esters are mentioned to be useful as plasticizers.

Other documents relate to cyclic polyether ester, which are usually called oxo crown ethers. Oxo crown ethers are cyclic polyalkylene oxides with at least one ester group within the cycle.

JP 55-143981 discloses the preparation of cyclic polyether ester, which are usually called oxo crown ethers. The mentioned oxo crown ethers are cyclic esters with 2 to 9 ether groups and 1 to 2 ester groups. They are synthesized in a multistep synthesis starting with a polyethylene oxide, converting it with sodium metal to the mono sodium salt of the polyethylene oxide, adding sodium bromoacetate under elimination of sodium bromide, further adding p-toluenesulfonyl chloride (also called tosyl chloride) as leaving group to the obtained carboxylate group, and intramolecularly cyclizing the $\omega$-hydroxy-$\alpha$-tosyl ester in the presence of a templating metal ion under elimination of the tosyl group to the respective oxo crown ether. Oxo crown ethers are mentioned to be mainly used as complexing agents for alkali and alkaline earth metal cations, e.g. in organic synthesis, separation, analysis, biochemistry and pharmaceuticals.

Y. Nakatsuji et al., Synthesis (1981) 42-44 also describe the preparation of oxo crown ethers with 3 to 5 ether groups and one ester group. Polyethylene oxide is reacted with sodium metal and bromoacetic acid obtaining a polyethylene oxide with a terminal methane carboxylate group, which is then esterified with methanol. The obtained $\omega$-hydroxy-$\alpha$-methyl ester is then either directly cyclized by an intramolecular transesterification to the respective oxo crown ether, or saponified to a polyethylene oxide having a terminal carboxylic acid group and a terminal OH-group, and then intramolecularly cyclized by dehydration.

L. van der Mee et al., J. Polymer Sci. Part A, Polymer Chem. 44(7) (2006) 2166-2176 disclose the preparation of 2-oxa-12-crown-4-ether by conversion of triethylene glycol with t-butylbromo-aceate under elimination of sodium bromide, and cyclization of the obtained t-butyl ester in the presence of cobalt dichloride. Furthermore, they disclose

the ring-opening polymerization of the obtained 2-oxa-12-crown-4-ether and the copolymerization of 2-oxa-12-crown-4-ether with ω-pentadecanolactone in the presence of Novozym 435 as a catalyst and benzyl alcohol to linear polymers containing either

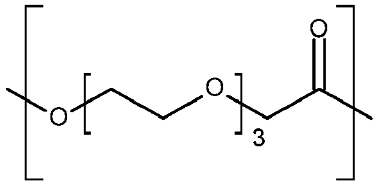

units or mixtures of

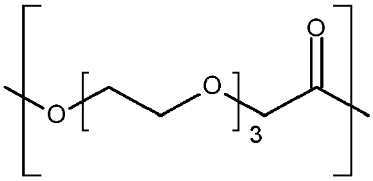

and

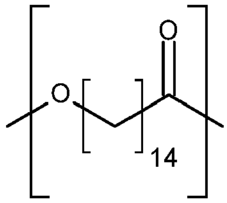

units. Oxo crown ethers are mentioned to be highly interesting monomers for the synthesis of hydrophilic polyesters.

Beside polyalkylene oxides with functionalized end groups and oxo crown ethers, also linear polyalkylene oxides with functionalized groups within the oxyalkylene chain are known in the state of the art.

US 2011/0,207,634 discloses the preparation of polyalkylene oxides with carboxylate end groups, in which the polyalkylene oxide chain may contain exactly one ester group. The polyalkylene oxides with carboxylate end groups and one ester group in the polymer chain are prepared by reacting the corresponding polyalkylene oxides starting material having OH end groups with a base in the presence of a transition metal catalyst under elimination of hydrogen. Ether carboxylates are mentioned as useful mild anionic surfactants.

WO 2001/012,203 relates to a new class of polymers for surgical use which are useful as a sterile adhesion prevention barrier between the tissues of the animal, and which are formed from a polyoxaester having a first repeating unit

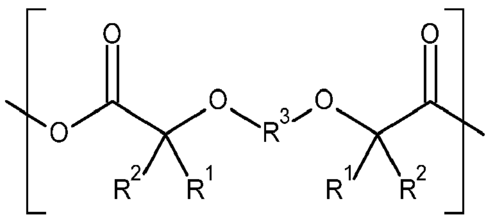

in which $R^1$ and $R^2$ are independently hydrogen or a $C_{1-8}$ alkyl group, and $R^3$ is a $C_{2-12}$ alkylene group or an oxyalkylene group with up to 2000 repeating units, and having a second repeating unit being either an oxyalkylene group with up to 2000 repeating units or a bivalent unit

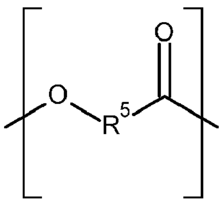

in which $R^5$ is a specific alkylene group with up to 17 carbon atoms, a specific oxyalkylene group with three carbon atoms and one oxygen atom, a specific keto unit with 3-7 $CH_2$ groups and one keto group, or a specific alkylester group with 2-6 $CH_2$ groups and one -O-CO- group.

US 6,147,168, US 6,224,894, EP 0,771,832 and EP 0,771,849 disclose further polymers for surgical use which contain the repeating units as specified in WO 2001/012,203 and an additional third repeating unit which is inter alia mentioned to be a bivalent unit

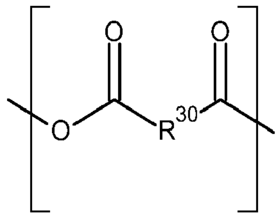

in which $R^{30}$ is a bivalent alkylene, arylene or arylalkylene group, or a bivalent unit

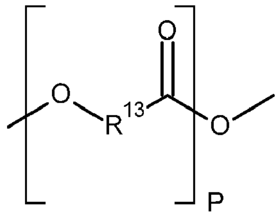

in which $R^{13}$ is a specific alyklene group with up to 17 carbon atoms, a specific oxyalkylene group with three carbon atoms and one oxygen atom, a specific keto unit with 3-7 $CH_2$ groups and one keto group, or a specific alkylester group with 2-6 $CH_2$ groups and one -O-CO- group, and P is an integer ensuring that the number average molecular weight of the polymer is less than 1,000,000.

The cited documents relating to linear polyalkylene oxides with functionalized groups within the oxyalkylene chain mention specific applications for these classes of functionalized polyalkylene oxides, such as its use as a mild anionic surfactants or for the production of surgical devices, but are silent on environmental issues and particularly on the biodegradability of such polymers. Furthermore, their synthesis requires at least two isolated components such as dicarboxylic acids and diols which have to be produced beforehand, isolated and purified, which causes a complex production.

EP-application number EP xxxxxxxxxxxxxx (BASF-internal reference 210173EP01) describes the use of polyalkylene oxide ester polymers for the preparation of biodegradable graft polymers by grafting a polymeric side chain, such as a polymer obtained by polymerization of a vinyl ester monomer and optionally other vinyl monomers, onto the polyalkylene oxide ester polymer.

It was an object of the present invention to find a new class of compounds which are able to substitute polyalkylene oxides, particularly polyethylene oxides, polypropylene oxides, poly-1,2-butylene oxides and polytetrahydrofuran, in their typical applications such as for the encapsulation of fragrances, or in the preparation of graft polymers for its use in homecare and laundering applications, and which have the same or at least very similar application properties than the products based on polyalkylene oxides, but a better biodegradability. Moreover, the polymers of the new class shall be easy to produce and thus particularly based on easily available starting materials. Finally, they shall be safe and durable in their application.

It was a further object of the present invention to find a process for the preparation of such new compounds, which is based on the use of easily available starting materials, is easy to conduct, enables a high yield, and in particular produces the new compounds in a purity which enables their further use without a complex purification.

Moreover, it was also an object of the present invention to indicate the usefulness of the new compounds for various applications.

We have surprisingly found a polyalkylene oxide ester polymer with a weight average molecular weight $M_w$ of 500 to 50 000 g/mol and a polydispersity PD of 2 to 6, comprising 10 to 560 ether groups and 2 to 51 ester groups, which are interconnected with alkylene groups, which contains 1 to 51 structural elements of the general formula (I)

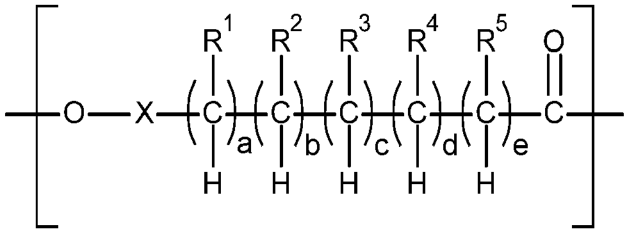

(I)

in which

- the -O- unit at the left side is bound to a -CO- unit of an adjacent unit of the polymer, forming an ester unit,
- the -CO- unit at the right side is bound to a -O- unit of an adjacent unit of the polymer, forming a further ester unit,
- $R^1$, $R^2$, $R^3$, $R^4$, $R^5$ represent independent of each other a hydrogen atom or a $C_{1-12}$ alkyl group,
- a, b, c, d, e represent independent of each other an integer of 0 or 1, whereas the sum of a to e is 1 to 5, and
- X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one $C_{1-12}$ alkyl group.

The polyalkylene oxide ester polymer of the invention is characterized by its weight average molecular weight $M_w$, its polydispersity PD, its number of ether groups, its number of ester groups, and the existence of at least one structural element (I).

The weight average molecular weight $M_w$ of the polyalkylene oxide ester polymer of the invention is 500 to 50 000 g/mol. $M_w$ includes the mass of individual chains, which contributes to the overall molecular weight of the polymer and considers that bigger molecules contain more mass than smaller molecules. It is determined by size exclusion chromatography (SEC) in a liquid-solid phase and detection by differential light refraction against a reference cell, whereas the unit is calibrated with a polymer of known molecular weight. $M_w$ is then calculated by computational methods based on the course of the curve of the chromatogram. Such a method is well known in the art. The weight average molecular weight $M_w$ is preferably ≥ 750 g/mol, more preferably ≥ 1000 g/mol, particularly preferably ≥ 2000 g/mol, very particularly preferably ≥ 3000 g/mol and most preferably ≥ 4000 g/mol, and preferably ≤ 45 000 g/mol, more preferably ≤ 40 000 g/mol, particularly preferably ≤ 35 000 g/mol, very particularly preferably ≤ 25 000 g/mol and most preferably ≤ 15 000 g/mol.

Since the weight average molecular weight $M_w$ is only a mean value of the molecular weight without information on the distribution of the molar weights of the individual molecules, the polyalkylene oxide ester polymer of the invention is further specified by the polydispersity PD. The polydispersity PD is defined as $M_w/M_n$, whereas $M_n$ is the number average molecular weight specifying the ordinary arithmetic mean or average of the molecular weights of the individual molecules. The polyalkylene oxide ester polymer of the invention has a polydispersity PD of 2 to 6, preferably ≥ 2.5 and more preferably ≥ 3, and preferably ≤ 5.

The number average molecular weight $M_n$ is preferably 250 to 20 000 g/mol, more preferably ≥ 500 g/mol and particularly preferably ≥ 1000 g/mol, and more preferably ≤ 15 000 g/mol and particularly preferably ≤ 10 000 g/mol.

The crucial characteristic of the polyalkylene oxide ester polymer of the invention, which surprisingly enables a high biodegradability, is the existence of ester groups within the polyalkylene oxide polymer chain. Polyalkylene oxide units, which as such are at least fairly biodegradable, and ester groups are linked to each other. Since the polyalkylene oxide units itself alternately contain ether groups and alkylene groups, the polyalkylene oxide ester polymer can also be described as a polymer containing ether groups and ester groups, which are interconnected with alkylene groups. For the sake of good order, it is pointed out that the term polyalkylene oxide does not embrace acetal or ketal units in which one carbon atom is interlinked with two ether groups, such as $-O-CH_2-O-$. This is consistent with the common use of the term polyalkylene oxide and known by the person skilled in the art.

In the context of this document, the term "ether group" specifies a -O- unit, which is on both sides bound to carbon atoms which, independent of one other, have an oxidation state of -2, -1 or 0, and which are further bound to hydrogen atoms or other carbon atoms, such as for example -2 for a methyl group, -1 for an unsubstituted alkylene group or 0 for an alpha alkyl substituted alkylene group. In analogy to that, the term "ester group" specifies a -CO- unit which is at one side bound to a carbon atom, which has an oxidation state of -3, -2, -1 or 0, such as for example -3 for a methyl group, -2 for an unsubstituted alkylene group further bound to another carbon atom in the polymer chain, -1 for an alpha alkyl substituted alkylene group further bound to another carbon atom in the polymer chain or for an unsubstituted alkylene group further bound to an -O- group, or 0 for an alpha alkyl substituted alkylene group further bound to an -O- group, and at the other side to a -O- unit which in turn is at the opposite side bound to a carbon atom with an oxidation state of -2, -1 or 0.

Specifically, the polyalkylene oxide ester polymer of the invention contains 10 to 560 ether groups and 2 to 51 ester groups, which are interconnected with alkylene groups, wherein it contains 1 to 51 structural elements of the general formula (I)

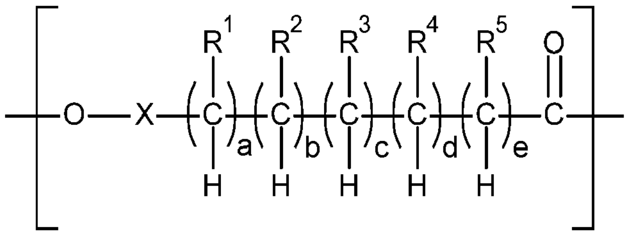

(I)

in which

- the -O- unit at the left side is bound to a -CO- unit of an adjacent unit of the polymer, forming an ester unit,
- the -CO- unit at the right side is bound to a -O- unit of an adjacent unit of the polymer, forming a further ester unit,
- $R^1$, $R^2$, $R^3$, $R^4$, $R^5$ represent independent of each other a hydrogen atom or a $C_{1-12}$ alkyl group,
- a, b, c, d, e represent independent of each other an integer of 0 or 1, whereas the sum of a to e is 1 to 5, and
- X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one $C_{1-12}$ alkyl group.

The number of the ether groups specified above as 10 to 560 and the number of the ester groups specified above as 2 to 51 relate to the individual polyalkylene oxide ester polymer molecules. Due to the polydispersity PD, the number of the ether groups and ester groups of the specific polyalkylene oxide ester polymer molecules, which constitute the polyalkylene oxide ester polymer with the weight average molecular weight $M_w$ of 500 to 50 000 g/mol and the polydispersity PD of 2 to 6, show an individual distribution. Consequently, the polyalkylene oxide ester polymer typically contains polyalkylene oxide ester polymer molecules with different numbers of ester groups and ether groups.

Based on the weight average molecular weight $M_w$, the polydispersity PD of the polyalkylene oxide ester polymer and the ratio of the ether groups and ester groups, which can be analytically determined with the knowledge of the person skilled in the art, the average numbers of ether groups and ester groups of the polyalkylene oxide ester polymer can be determined.

The adjacent units of the polymer bound to the -O- unit at the left, and the -CO- unit at the right side of formula (I) contain further alkylene, ether and ester groups, or form together with the mentioned -O- and -CO- units ester groups, respectively, in a number to form a polyalkylene oxide ester polymer, which contains a total number of ether groups and ester groups within the specified range.

The end groups of the polyalkylene oxide ester polymer can principally be any end groups which are suitable for forming the ends of such a polymer. Examples of suitable end groups are -OH, -COOH, primary, secondary or tertiary amine groups, branched or linear alkyl groups, aralkyl groups, aromatic groups, hydroxyalkyl groups, carbonyl groups, carboxyl groups, carboxylic acid ester groups, amide groups, urethan groups, carbamide groups, xanthogenate groups, dithiocarbamate groups or carbamate groups. However, -OH, -COOH, carboxyl groups, hydroxyalkyl groups and alkyl groups are typically preferred, especially -OH and -COOH.

The radicals $R^1$, $R^2$, $R^3$, $R^4$, $R^5$ in formula (I) represent independent of each other a hydrogen atom or a $C_{1-12}$ alkyl group. The alkyl groups can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^2$, $R^3$, $R^4$ and $R^5$ represent a hydrogen atom, and $R^1$ a hydrogen atom or a $C_{1-12}$ alkyl group. More preferably, $R^1$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices a, b, c, d, e represent independent of each other an integer of 0 or 1, whereas the sum of a to e is 1 to 5. Preferably, a, b, c are 1, and d, e are 0. More preferably, a is 1, and b, c, d, e are 0.

A specifically preferred structural element based on formula (I) is the element of the general formula (Ia)

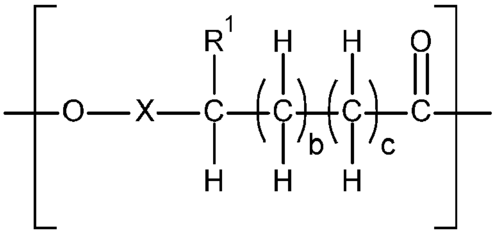

(Ia)

in which

- $R^1$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- b, c represent an integer of 0 or 1, whereas the sum of b to c is 0 or 2.

A further specifically preferred structural element based on formula (Ia) is the element of the general formula (Ib)

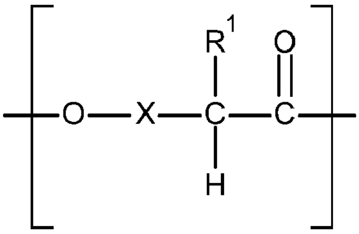

(Ib)

in which

- $R^1$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unit X in formula (I) represents a polyalkylene oxide unit with 4 to 100 alkylene oxide units, whereby the alkylene oxide units contain independent of each other 2 to 6 carbon atoms in the direct chain between two -O- units, which can also be denoted as a $C_{2-6}$ alkylene unit, whereby each of the carbon atoms in the direct chain between two -O- units contain independent of each other either two hydrogen atoms, or one hydrogen atom and one $C_{1-12}$ alkyl group. The preferred unit X can be expressed by the general formula (Ic)

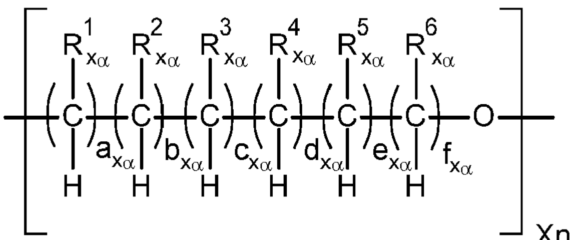

(Ic)

in which

- $\alpha$ represents an index from 1 to Xn specifying the running count for each repeating unit,
- $R^1_{x\alpha}$, $R^2_{x\alpha}$, $R^3_{x\alpha}$, $R^4_{x\alpha}$, $R^5_{x\alpha}$, $R^6_{x\alpha}$ represent independent of each other, and under consideration that $\alpha$ is a running count for each repeating unit, a hydrogen atom or a $C_{1-12}$ alkyl group,
- $a_{x\alpha}$, $b_{x\alpha}$, $c_{x\alpha}$, $d_{x\alpha}$, $e_{x\alpha}$, $f_{x\alpha}$ represent independent of each other, and under consideration that $\alpha$ is a running count for each repeating unit, an integer of 0 or 1, whereas the sum of $a_{x\alpha}$ to $f_{x\alpha}$ is 2 to 6, and

- Xn represents an integer of 4 to 100.

The small letter x in the radicals, as for example in $R^1_{x\alpha}$, and in the indices, as for example in $a_{x\alpha}$, indicate that they refer to unit X. The same is indicated by the capital letter X in the number of the repeating units Xn. Furthermore, the small letter $\alpha$ in the radicals, as for example in $R^1_{x\alpha}$, and in the indices, as for example in $a_{x\alpha}$, specify that each of the radicals and indices have their own sub-number, indicating that the radicals and indices may vary from one alkylene oxide unit to the other within a polyalkylene oxide unit X. For example, radical $R^1_{x1}$ of the alkylene oxide unit with the running count 1 may be a hydrogen atom, whereas $R^1x_2$ of the alkylene oxide unit with the running count 2 may be methyl group, and so on. Similarly and also to be understood as an example, the index $c_{x1}$ of the alkylene oxide unit with the running count 1 may be 0, whereas $c_{x2}$ of the alkylene oxide unit with the running count 2 may be 1, and so on.

The $C_{1-12}$ alkyl group in the radicals $R^1_{x\alpha}$, $R^2_{x\alpha}$, $R^3_{x\alpha}$, $R^4_{x\alpha}$, $R^5_{x\alpha}$, $R^6_{x\alpha}$ in formula (Ic) can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^2_{x\alpha}$, $R^3_{x\alpha}$, $R^4_{x\alpha}$, $R^5_{x\alpha}$ and $R^6_{x\alpha}$ represent a hydrogen atom, and $R^1_{x\alpha}$ a hydrogen atom or a $C_{1-12}$ alkyl group. More preferably, $R^1_{x\alpha}$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices $a_{x\alpha}$, $b_{x\alpha}$, $c_{x\alpha}$, $d_{x\alpha}$, $e_{x\alpha}$, $f_{x\alpha}$ represent independent of each other an integer of 0 or 1, whereas the sum of $a_{x\alpha}$ to $f_{x\alpha}$ is 2 to 6. Preferably, $a_{x\alpha}$, $b_{x\alpha}$, $c_{x\alpha}$, $f_{x\alpha}$ are 1, and $d_{x\alpha}$, $ex_{\alpha}$ are 0. More preferably, $a_{x\alpha}$, $f_{x\alpha}$ are 1, and $b_{x\alpha}$, $c_{x\alpha}$, $d_{x\alpha}$, $e_{x\alpha}$ are 0.

A specifically preferred unit X is the unit of the general formula (Id)

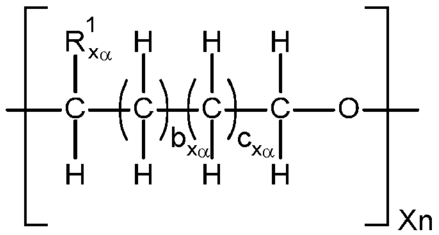

(Id)

in which

- $R^1_{x\alpha}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- $b_{x\alpha}$, $c_{x\alpha}$ represent an integer of 0 or 1, whereas the sum of b to c is 0 or 2, and
- Xn represents an integer of 4 to 100.

A further specifically preferred unit X based on formula (Id) is the unit of the general formula (Ie)

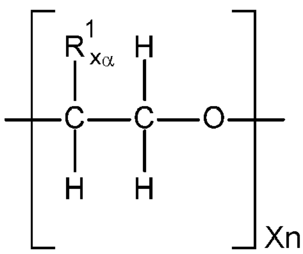

(Ie)

in which

- $R^1_{x\alpha}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and

- Xn represents an integer of 4 to 100.

The number of the repeating units Xn in formula (Ic) is an integer of 4 to 100. It is preferably $\geq 5$, more preferably $\geq 8$ and particularly preferably $\geq 10$, and preferably $\leq 75$ and more preferably $\leq 50$.

It is explicitly emphasized that the alkylene oxide units in unit X can be the same with unit X, or differ from each other, in terms of different radicals $R^1_{x\alpha}$ to $R^6_{x\alpha}$ and in terms of different indices $a_{x\alpha}$ to $f_{x\alpha}$. This is already clearly indicated by the index $x\alpha$ in formula (Ic), specifying sub-numbers for each radical, as for example in $R^1_{x\alpha}$, and for each index, as for example in $a_{x\alpha}$, based on the running count for each repeating unit.

Moreover, it is explicitly emphasized that in the polyalkylene oxide ester polymer also each structural element (I), if more than one element (I) is present, may be identical to one or more of the others, or may differ from one or more of the others.

The different parts of the structural element (I) such as the radicals, indices and unit X including their general and preferred values have already been described above. The following paragraphs relate to preferred specific combinations of these parts.

Particularly preferred is a polyalkylene oxide ester polymer containing the structural element (I), in which

- $R^1$ represents a hydrogen atom or a methyl group,
- $R^2$, $R^3$ represent a hydrogen atom,
- d, e are 0,
- a is 1,
- b, c represent an integer of 0 or 1, whereas the sum of b to c is 0 or 2, and
- X represents a polyalkylene oxide unit with 4 to 100 alkylene oxide units, whereby the alkylene oxide units are independent of each other and contain 2 or 4 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the other one or three carbon atoms contain two hydrogen atoms each, whereby each -O- unit carries not more than one methyl group carrying carbon atom in $\alpha$-position.

This particularly relates to a respective polymer in which the structural element (I) is solely formed by $C_2$-units, solely formed by $C_4$-units or formed by a mixture thereof. Each $C_2$- and $C_4$-unit may either carry only hydrogen atoms, or hydrogen atoms and one methyl group. If a methyl group in a $C_2$- or $C_4$-unit is present, it is bound at a carbon atom in $\alpha$-position to an -O- unit, whereby each -O- unit carries in its $\alpha$-position not more than one methyl group carrying carbon atom.

Such elements are typically based on ethylene oxide monomers, propylene oxide monomers, tetrahydrofuran monomers or mixtures thereof. In case of propylene oxide based $-CHCH_3-CH_2-O-$ and tetrahydrofuran based $-CH_2-CH_2-CH_2-CH_2-O-$ units within formula (I), it may be advantageous if the structural element (I) contains at the border region of element (I) one or more $C_2$-based units without methyl groups. This can be easily achieved by firstly polymerizing propylene oxide or tetrahydrofuran and later stop the addition of propylene oxide and tetrahydrofuran, respectively, and supply ethylene oxide to finish the polymerization, leading to $C_2$-based units at both end sides. The obtained polyalkylene oxides can then be processed as described further down to form the structural unit (I) in the polyalkylene oxide ester polymer. Due to the mentioned production process, ethylene oxide is co-polymerized with propylene oxide and tetrahydrofuran, respectively, causing an irregular structure in the border region in which $-CHCH_3-CH_2-O-$ and $-CH_2-CH_2-CH_2-CH_2-O-$ units, respectively, alternate with $-CH_2-CH_2-O-$ units, so that the transition from $-CHCH_3-CH_2-O-$ and $-CH_2-CH_2-CH_2-CH_2-O-$ units, respectively, to $-CH_2-CH_2-O-$ units might not be sharp. Such effect is well known in the art and the respective alternating structure also often called "dirty structures".

Another particularly preferred polyalkylene oxide ester polymer contains the structural element (I), in which

- $R^1$ represents a hydrogen atom or a methyl group,
- b, c, d, e are 0,
- a is 1, and
- X represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the other carbon atom two hydrogen atoms, whereby each -O- unit carries not more than one methyl group carrying carbon atom in $\alpha$-position.

This particularly relates to a respective polymer in which the structural element (I) is solely formed by $C_2$-units

based on ethylene oxide and propylene oxide.

Although particularly for a polyalkylene oxide ester polymer with a lower weight average molecular weight $M_w$ such as below 1000 g/mol the polymer may alternatively have a cyclic structure, it generally has a non-cyclic structure.

Particularly preferred are the following non-cyclic polyalkylene oxide ester polymers A) to D), whereby their radicals and indices relate to the formulas (I) and (Ic):

A)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$, $R^6_{x\alpha}$ | are | H |
| $b_{x\alpha}$, $c_{x\alpha}$, $d_{x\alpha}$, $e_{x\alpha}$ | are | 0 |
| Xn | is | 4 to 100 |

B)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$ | is | H or methyl |
| $R^6_{x\alpha}$ | is | H |
| $b_{x\alpha}$, $c_{x\alpha}$, $d_{x\alpha}$, $e_{x\alpha}$ | are | 0 |
| Xn | is | 4 to 100 |

C)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$ | is | H or ethyl |
| $R^6_{x\alpha}$ | is | H |

(continued)

| | | |
|---|---|---|
| $b_{x\alpha}$, $c_{x\alpha}$ | are | either both 0 or both 1 |
| $R^2_{x\alpha}$, $R^3_{x\alpha}$ | are | H |
| $d_{x\alpha}$, $e_{x\alpha}$ | are | 0 |
| Xn | is | 4 to 100 |

D)

| | | |
|---|---|---|
| $M_w$ [g/mol] | is | 500 to 50 000 |
| number of ether groups | is | 10 to 560 |
| number of ester groups | is | 2 to 51 |
| a, b, c | are | 1 |
| $R^1$, $R^2$, $R^3$ | are | H |
| d, e | are | 0 |
| $a_{x\alpha}$, $b_{x\alpha}$, $c_{x\alpha}$, $f_{x\alpha}$ | are | 1 |
| $R^1_{x\alpha}$, $R^2_{x\alpha}$, $R^3_{x\alpha}$, $R^6_{x\alpha}$ | are | H |
| $d_{x\alpha}$, $e_{x\alpha}$ | are | 0 |
| Xn | is | 4 to 100 |

Regarding the polyalkylene oxide ester polymers mentioned under B) above, the radicals $R^1_{x\alpha}$ at or near the two borders of the X unit are preferably H, whereas the radicals $R^1_{x\alpha}$ in the rest of unit X are preferably methyl. This is based on the preparation of such elements, which typically start with a polymerization of propylene oxide on which at the end ethylene oxide is co-polymerized.

Regarding the polyalkylene oxide ester polymers mentioned under C) above, the indices $b_{x\alpha}$ and $c_{x\alpha}$ at or near the two borders of the X unit are preferably 0, whereas the indices $b_{x\alpha}$ and $c_{x\alpha}$ in the rest of unit X are preferably 1. This is based on the preparation of such elements, which typically start with a polymerization of 1,2-butylen oxide on which at the end ethylene oxide is co-polymerized.

As already mentioned before, the polyalkylene oxide ester polymer of the invention comprises 10 to 560 ether groups and 2 to 51 ester groups, wherein it contains 1 to 51 structural elements of formula (I). For the avoidance of doubt, it is emphasized that the amount of the ether and ester groups mentioned above refer to the whole polyalkylene oxide ester polymer, including the respective groups present in the structural elements of formula (I). The polyalkylene oxide ester polymer contains preferably ≥ 15, more preferably ≥ 20 and particularly preferably ≥ 30, and preferably ≤ 500, more preferably ≤ 400 and particularly preferably ≤ 350 ether groups. It contains preferably ≥ 3, more preferably ≥ 4 and particularly preferably ≥ 5, and preferably ≤ 41, more preferably ≤ 31, particularly preferably ≤ 21 and very particularly preferably ≤ 15 ester groups.

The ratio of the number of the ether groups to the number of the ester groups is preferably 4 to 100, more preferably ≥ 5, particularly preferably ≥ 10 and very particularly preferably ≥ 15, and preferably ≤ 75, more preferably ≤ 50, particularly preferably ≤ 40 and very particularly preferably ≤ 35.

The number of the structural elements (I) in the polyalkylene oxide ester polymer is 1 to 51, preferably ≥ 2, more preferably ≥ 3, particularly preferably ≥ 4 and very particularly preferably ≥ 5, and preferably ≤ 41, more preferably ≤ 31, particularly preferably ≤ 21, very particularly preferably ≤ 15 and most preferably ≤ 9.

The polyalkylene oxide ester polymer can be completely formed by the structural elements (I) plus respective end groups at both ends, containing one or more further alkylene oxide elements, or one or more other structural elements. Preferably, the polyalkylene oxide ester polymer contains further alkylene oxide elements with -O- units and -CO- units at the edges of these elements, forming ester groups together with -CO- units and -O- units of other elements.

Structural elements which form ester groups together with structural element (I) or with other structural elements contain either at least one -O- unit or at least one -CO- unit at one end side of such a structural element. -O- unit and -CO- unit then formally form an ester unit. Structural elements of such further alkylene oxide units preferably contain either two -CO- units or two -O- units at the end of such structural elements. Since an ester group formally requires one -O- unit and one -CO- unit, the number of the structural elements with -O- unit and one -CO- unit at their end shall

advantageously be balanced.

As already mentioned above, polyalkylene oxide ester polymer which additionally contain such further structural elements beside structural element (I) are preferred. Specifically, a polyalkylene oxide ester polymer is preferred, which, in addition to structural element (I), further contains 1 to 25 structural elements of the general formula (II)

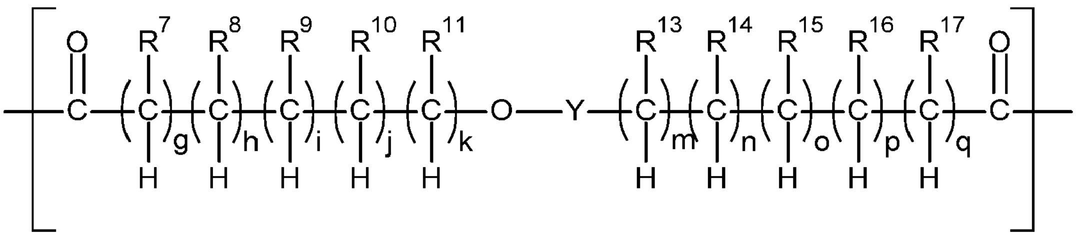

(II)

in which

- the -CO- unit at the left side is bound to a -O- unit of an adjacent unit of the polymer, forming an ester unit,
- the -CO- unit at the right side is bound to a -O- unit of an adjacent unit of the polymer, forming a further ester unit,
- $R^7$, $R^8$, $R^9$, $R^{10}$, $R^{11}$, $R^{13}$, $R^{14}$, $R^{15}$, $R^{16}$, $R^{17}$ represent independently of each other a hydrogen atom or a $C_{1-12}$ alkyl group,
- g, h, i, j, k, m, n, o, p, q represent independent of each other an integer of 0 or 1, whereas the sum of g to k is 1 to 5, and the sum of m to q is 1 to 5, and
- Y represents a polyalkylene oxide unit with 0 to 99 alkylene oxide units, whereby the alkylene oxide units contain independent of each other 2 to 6 carbon atoms in the direct chain between two ether groups, whereby each of the carbon atoms in the direct chain between two ether groups contain independent of each other either two hydrogen atoms, or one hydrogen atom and one $C_{1-12}$ alkyl group,

and polyalkylene oxide units of the general formula (III) in a number suitable to form ester bonds with the -CO- units of the structural elements of the formulas (I) and (II)

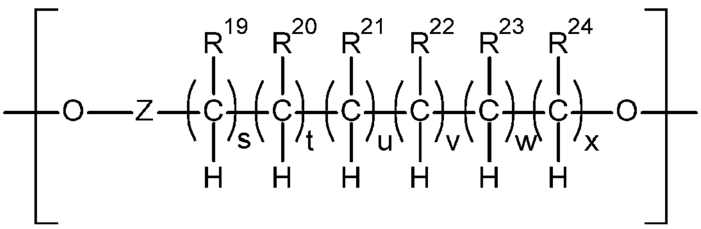

(III)

in which

- the -O- unit at the left side is bound to a -CO- unit of an adjacent unit of the polymer, forming an ester unit,
- the -O- unit at the right side is bound to a -CO- unit of an adjacent unit of the polymer, forming a further ester unit,
- $R^{19}$, $R^{20}$, $R^{21}$, $R^{22}$, $R^{23}$, $R^{24}$ represent independently of each other a hydrogen atom or a $C_{1-12}$ alkyl group,
- s, t, u, v, w, x represent independent of each other an integer of 0 or 1, whereas the sum of s to x is 2 to 6, and
- Z represents a polyalkylene oxide unit with 0 to 100 alkylene oxide units, whereby the alkylene oxide units are independent of each other and contain 2 to 6 carbon atoms in the direct chain between two ether groups, whereby each of the carbon atoms in the direct chain between two ether groups contain independent of each other either two hydrogen atoms, or one hydrogen atom and one $C_{1-12}$ alkyl group,

with the proviso that, together with the structural elements of the formula (I), the total number of ester groups does not exceed the maximum number of ester groups specified for the polyalkylene oxide ester polymer.

Each side of the structural element (II) can, for example, be bound to the -O- unit containing side of the structural element (I), to the structural element (III), to an -O- unit containing side of any other polyalkylene oxide, or to another structural element of the polymer which is not represented by any of the structural elements (I), (II) or (III). It is, of course, also possible that one end side of (II) is bound to an end group of the polyalkylene oxide ester polymer. Likewise, each side of the structural element (III) can, for example, be bound to the -CO- unit containing side of the structural element (I), to the structural element (II), to an -CO- unit containing side of any other polyalkylene oxide, or to another structural

element of the polymer which is not represented by any of the structural elements (I), (II) or (III). It is, of course, also possible that one end side of (III) is bound to an end group of the polyalkylene oxide ester polymer.

The radicals $R^7$, $R^8$, $R^9$, $R^{10}$, $R^{11}$, $R^{13}$, $R^{14}$, $R^{15}$, $R^{16}$, $R^{17}$ in formula (II) represent independent of each other a hydrogen atom or a $C_{1-12}$ alkyl group. The alkyl groups can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^7$, $R^8$, $R^9$, $R^{10}$, $R^{11}$, $R^{14}$, $R^{15}$, $R^{16}$, $R^{17}$ represent a hydrogen atom, and $R^{13}$ a hydrogen atom or a $C_{1-12}$ alkyl group. More preferably, $R^{13}$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices g, h, i, j, k, m, n, o, p, q in formula (II) represent independent of each other an integer of 0 or 1, whereas the sum of g to k is 1 to 5 and the sum of m to q is 1 to 5. Preferably, i, j, k, m, n, o are 1, and g, h, p, q are 0. More preferably, k, m are 1, and g, h, i, j, n, o, p, q are 0.

A specifically preferred structural element based on formula (II) is the element of the general formula (IIa)

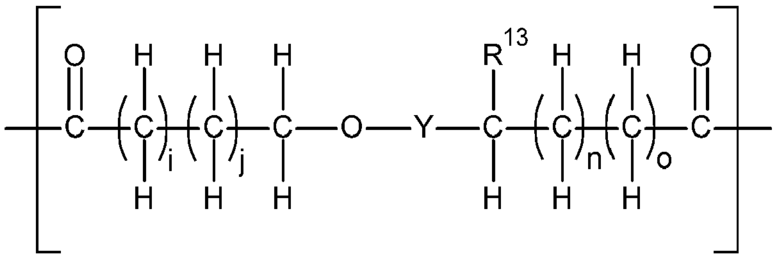

(IIa)

in which

- $R^{13}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- i, j, n, o represent an integer of 0 or 1, whereas the sum of i to j is 0 or 2 and the sum of n to o is 0 or 2.

A further specifically preferred structural element based on formula (IIa) is the element of the general formula (IIb)

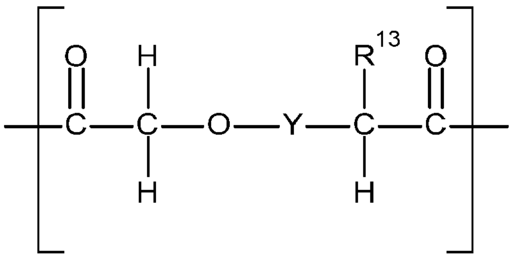

(IIb)

in which

- $R^{13}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unit Y in formula (II) represents a polyalkylene oxide unit with 0 to 99 alkylene oxide units, whereby the alkylene oxide units contain independent of each other 2 to 6 carbon atoms in the direct chain between two -O- units, which can also be denoted as a $C_{2-6}$ alkylene unit, whereby each of the carbon atoms in the direct chain between two -O- units contain independent of each other either two hydrogen atoms, or one hydrogen atom and one $C_{1-12}$ alkyl group.

The preferred unit Y can be expressed by the general formula (IIc)

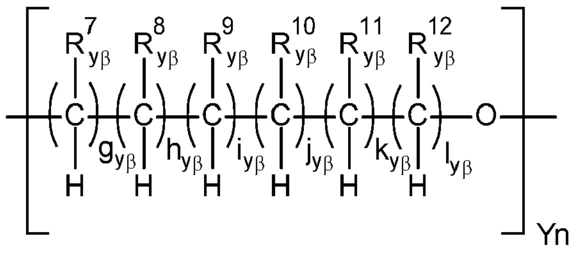

(IIc)

in which

- β represents an index from 1 to Yn specifying the running count for each repeating unit,
- $R'_{y\beta}$, $R^8_{y\beta}$, $R^9_{y\beta}$, $R^{10}_{y\beta}$, $R^{11}_{y\beta}$, $R^{12}_{y\beta}$ represent independent of each other, and under consideration that β is a running count for each repeating unit, a hydrogen atom or a $C_{1-12}$ alkyl group,
- $g_{y\beta}$, $h_{y\beta}$, $i_{y\beta}$, $j_{y\beta}$, $_{ky\beta}$, $l_{y\beta}$ represent independent of each other, and under consideration that β is a running count for each repeating unit, an integer of 0 or 1, whereas the sum of $g_{y\beta}$ to $l_{y\beta}$ is 2 to 6, and
- Yn represents an integer of 0 to 99.

The small letter y in the radicals in formula (IIc), as for example in $R^7_{y\beta}$, and in the indices, as for example in $g_{y\beta}$, indicate that they refer to unit Y. The same is indicated by the capital letter Y in the number of the repeating units Yn. Furthermore, the small letter β in the radicals, as for example in $R^7_{y\beta}$, and in the indices, as for example in $g_{y\beta}$, specify that each of the radicals and indices have their own sub-number, indicating that the radicals and indices may vary from one alkylene oxide unit to the other within a polyalkylene oxide unit Y. For example, radical $R^7_{y1}$ of the alkylene oxide unit with the running count 1 may be a hydrogen atom, whereas $R^7_{y2}$ of the alkylene oxide unit with the running count 2 may be methyl group, and so on. Similarly and also to be understood as an example, the index $i_{y1}$ of the alkylene oxide unit with the running count 1 may be 0, whereas $i_{y2}$ of the alkylene oxide unit with the running count 2 may be 1, and so on.

The $C_{1-12}$ alkyl group in the radicals $R^7_{y\beta}$, $R^8_{y\beta}$, $R^9_{y\beta}$, $R^{10}_{y\beta}$, $R^{11}_{y\beta}$, $R^{12}_{y\beta}$ in formula (IIc) can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^8_{y\beta}$, $R^9_{y\beta}$, $R^{10}_{y\beta}$, $R^{11}_{y\beta}$, $R^{12}_{y\beta}$ represent a hydrogen atom, and $R^7_{y\beta}$ a hydrogen atom or a $C_{1-12}$ alkyl group. More preferably, $R^7_{y\beta}$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices $g_{y\beta}$, $h_{y\beta}$, $i_{y\beta}$, $j_{y\beta}$, $k_{y\beta}$, $l_{y\beta}$ in formula (IIc) represent independent of each other an integer of 0 or 1, whereas the sum of $g_{y\beta}$ to $l_{y\beta}$ is 2 to 6. Preferably, $g_{y\beta}$, $h_{y\beta}$, $i_{y\beta}$, $l_{y\beta}$ are 1, and $j_{y\beta}$, $k_{y\beta}$ are 0. More preferably, $g_{y\beta}$, $l_{y\beta}$ are 1, and $h_{y\beta}$, $i_{y\beta}$, $j_{y\beta}$, $k_{y\beta}$ are 0.

A specifically preferred unit Y is the unit of the general formula (lid)

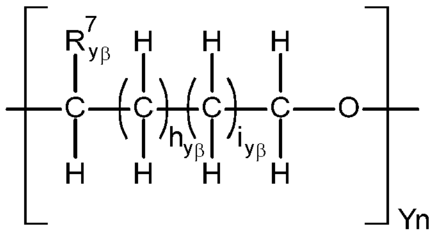

(IId)

in which

- $R^7_{y\beta}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- $h_{y\beta}$, $i_{y\beta}$ represent an integer of 0 or 1, whereas the sum of $h_{y\beta}$ to $i_{y\beta}$ is 0 or 2, and
- Yn represents an integer of 0 to 99.

A further specifically preferred unit Y based on formula (IId) is the unit of the general formula (IIe)

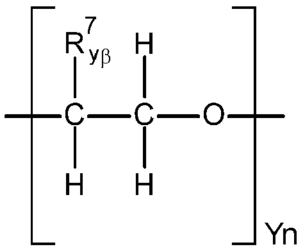

(IIe)

in which

- $R^7_{y\beta}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- Yn represents an integer of 0 to 99.

The number of the repeating units Yn in formula (IIc) is an integer of 0 to 99. It is preferably ≥ 1, more preferably ≥ 3, particularly preferably ≥ 7 and very particularly preferably ≥ 9, and preferably ≤ 74 and more preferably ≤ 49.

It is explicitly emphasized that the alkylene oxide units in unit Y can be the same within unit Y or differ from each other, in terms of different radicals $R^7_{y\beta}$ to $R^{12}_{y\beta}$ and in terms of different indices $g_{y\beta}$ to $l_{y\beta}$. This is already clearly indicated by the indexes yβ in formula (IIc) specifying sub-numbers for each radical, as for example in $R^7_{y\beta}$, and for each index, as for example in $g_{y\beta}$, based on the running count for each repeating unit.

Moreover, it is explicitly emphasized that in the polyalkylene oxide ester polymer also each structural element (II), if more than one element (II) is present, can be identical to one or more of the others, or can differ from one or more of the others.

The radicals $R^{19}$, $R^{20}$, $R^{21}$, $R^{22}$, $R^{23}$, $R^{24}$ in formula (III) represent independent of each other a hydrogen atom or a $C_{1-12}$ alkyl group. The alkyl groups can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^{19}$, $R^{20}$, $R^{21}$, $R^{22}$, $R^{23}$, $R^{24}$ in formula (III) represent a hydrogen atom, and $R^{19}$ a hydrogen atom or a $C_{1-12}$ alkyl group. More preferably, $R^{19}$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices s, t, u, v, w, x in formula (III) represent independent of each other an integer of 0 or 1, whereas the sum of s to x is 2 to 6. Preferably, s, t, u, x are 1, and v, w are 0. More preferably, s, x are 1, and t, u, v, w are 0.

A specifically preferred structural element based on formula (III) is the element of the general formula (IIIa)

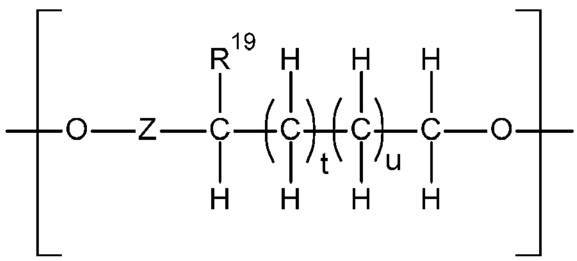

(IIIa)

in which

- $R^{19}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- t, u represent an integer of 0 or 1, whereas the sum of t to u is 0 or 2.

A further specifically preferred structural element based on formula (IIIa) is the element of the general formula (IIIb)

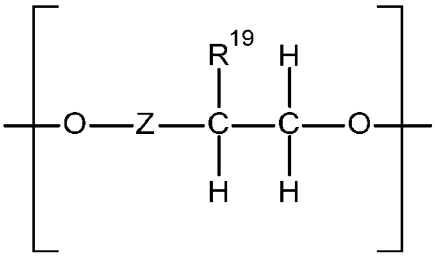

(IIb)

in which

- $R^{19}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The unit Z in formula (III) represents a polyalkylene oxide unit with 0 to 100 alkylene oxide units, whereby the alkylene oxide units contain independent of each other 2 to 6 carbon atoms in the direct chain between two -O- units, which can also be denoted as a $C_{2-6}$ alkylene unit, whereby each of the carbon atoms in the direct chain between two -O- units contain independent of each other either two hydrogen atoms, or one hydrogen atom and one $C_{1-12}$ alkyl group.

The preferred unit Z can be expressed by the general formula (IIIc)

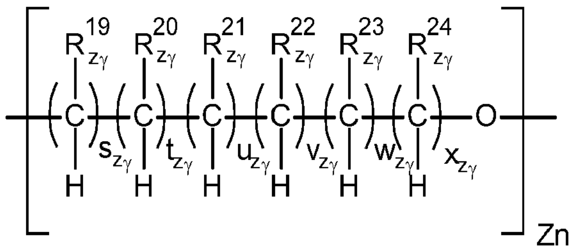

(IIIc)

in which

- y represents an index from 1 to Zn specifying the running count for each repeating unit,
- $R^{19}_{z\gamma}$, $R^{20}_{z\gamma}$, $R^{21}_{z\gamma}$, $R^{22}_{z\gamma}$, $R^{23}_{z\gamma}$, $R^{24}_{z\gamma}$ represent independent of each other, and under consideration that y is a running count for each repeating unit, a hydrogen atom or a $C_{1-12}$ alkyl group,
- $s_{z\gamma}$, $t_{z\gamma}$, $u_{z\gamma}$, $v_{z\gamma}$, $w_{z\gamma}$, $x_{z\gamma}$ represent independent of each other, and under consideration that y is a running count for each repeating unit, an integer of 0 or 1, whereas the sum of $s_{z\gamma}$ to $x_{z\gamma}$ is 2 to 6, and
- Zn represents an integer of 0 to 100.

The small letter z in the radicals in formula (IIIc), as for example in $R^{19}_{z\gamma}$, and in the indices, as for example in $s_{z\gamma}$, indicate that they refer to unit Z. The same is indicated by the capital letter Z in the number of the repeating units Zn. Furthermore, the small letter y in the radicals, as for example in $R^{19}_{z\gamma}$, and in the indices, as for example in $s_{z\gamma}$, specify that each of the radicals and indices have their own sub-number, indicating that the radicals and indices may vary from one alkylene oxide unit to the other within a polyalkylene oxide unit Z. For example, radical $R^{19}_{z1}$ of the alkylene oxide unit with the running count 1 may be a hydrogen atom, whereas $R^{19}_{z2}$ of the alkylene oxide unit with the running count 2 may be methyl group, and so on. Similarly and also to be understood as an example, the index $u_{z1}$ of the alkylene oxide unit with the running count 1 may be 0, whereas $u_{z2}$ of the alkylene oxide unit with the running count 2 may be 1, and so on.

The $C_{1-12}$ alkyl group in the radicals $R^{19}_{z\gamma}$, $R^{20}_{z\gamma}$, $R^{21}_{z\gamma}$, $R^{22}_{z\gamma}$, $R^{23}_{z\gamma}$, $R^{24}_{z\gamma}$ in formula (IIIc) can be linear or in case of $C_{3-12}$ alkyl be linear or branched. Preferred $C_{1-12}$ alkyl groups are methyl, ethyl, n-propyl, iso-propyl, n-butyl, iso-butyl, tert-butyl, n-pentyl, n-hexyl, n-heptyl, n-octyl, n-nonyl, n-decyl, n-undecyl and n-dodecyl. Preferably, $R^{20}_{z\gamma}$, $R^{21}_{z\gamma}$, $R^{22}_{z\gamma}$, $R^{23}_{z\gamma}$, $R^{24}_{z\gamma}$ represent a hydrogen atom, and $R^{19}_{z\gamma}$ a hydrogen atom or a $C_{1-12}$ alkyl group. More preferably,

$R^{19}_{z\gamma}$ represents a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom.

The indices $s_{z\gamma}$, $t_{z\gamma}$, $u_{z\gamma}$, $v_{z\gamma}$, $w_{z\gamma}$, $x_{z\gamma}$ in formula (IIIc) represent independent of each other an integer of 0 or 1, whereas the sum of $s_{z\gamma}$ to $x_{z\gamma}$ is 2 to 6. Preferably, $s_{z\gamma}$, $t_{z\gamma}$, $u_{z\gamma}$, $x_{z\gamma}$ are 1, and $v_{z\gamma}$, $w_{z\gamma}$ are 0. More preferably, $s_{z\gamma}$, $x_{z\gamma}$ are 1, and $t_{z\gamma}$, $u_{z\gamma}$, $v_{z\gamma}$, $w_{z\gamma}$ are 0.

A specifically preferred unit Z is the unit of the general formula (IIId)

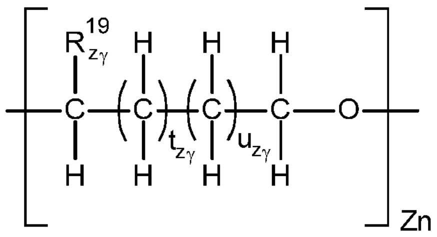

(IIId)

in which

- $R^{19}_{z\gamma}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- $t_{z\gamma}$, $u_{z\gamma}$ represent an integer of 0 or 1, whereas the sum of $t_{z\gamma}$ to $u_{z\gamma}$ is 0 or 2, and
- Zn represents an integer of 0 to 100.

A further specifically preferred unit Z based on formula (IIId) is the unit of the general formula (IIIe)

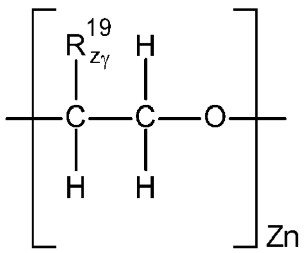

(IIIe)

in which

- $R^{19}_{z\gamma}$ represents a hydrogen atom or a $C_{1-12}$ alkyl group, more preferably a hydrogen atom, methyl, ethyl, n-propyl, iso-propyl, n-butyl, iso-butyl, tert-butyl, n-pentyl, n-hexyl, n-heptyl, n-octyl, n-nonyl, n-decyl, n-undecyl or n-dodecyl, particularly preferably a hydrogen atom, methyl, ethyl, n-propyl or n-decyl, very particularly preferably a hydrogen atom or methyl, and most preferably a hydrogen atom, and
- Zn represents an integer of 0 to 100.

The number of the repeating units Zn in formula (IIIc) is an integer of 0 to 100. It is preferably $\geq 2$, more preferably $\geq 4$, particularly preferably $\geq 8$ and very particularly preferably $\geq 10$, and preferably $\leq 75$ and more preferably $\leq 50$.

It is explicitly emphasized that the alkylene oxide units in unit Z can be the same within unit Z or differ from each other, in terms of different radicals $R^{19}_{z\gamma}$ to $R^{24}_{z\gamma}$ and in terms of different indices $s_{z\gamma}$ to $x_{z\gamma}$. This is already clearly indicated by the indexes zy in formula (IIIc) specifying sub-numbers for each radical, as for example in $R^{19}_{z\gamma}$, and for each index, as for example in $s_{z\gamma}$, based on the running count for each repeating unit.

Moreover, it is explicitly emphasized that in the polyalkylene oxide ester polymer also each structural element (III), if more than one element (III) is present, can be identical to one or more of the others, or can differ from one or more of the others.

The different parts of the structural elements (II) and (III) such as the radicals, indices and the units X and Y including their general and preferred values have already been described above. The following paragraphs relate to preferred specific combinations of these parts.

Particularly preferred is a polyalkylene oxide ester polymer containing the structural elements (I), (II) and (III) in which

- $R^{13}$, $R^{19}$ represent independent of each other a hydrogen atom or a methyl group,
- $R^9$, $R^{10}$, $R^{11}$, $R^{14}$, $R^{15}$, $R^{20}$, $R^{21}$, $R^{24}$ represent a hydrogen atom,
- g, h, p, q, v, w are 0,
- k, m, s, x are 1,
- i, j, n, o, t, u represent independent of each other an integer of 0 or 1, whereas the sum of i to j is 0 or 2, the sum of n to o is 0 or 2, and the sum of t to u is 0 or 2, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and contain 2 or 4 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the remaining other one or three carbon atoms two hydrogen atoms each, whereby each -O- unit carries not more than one methyl group carrying carbon atom in $\alpha$-position.

This particularly relates to a respective polymer in which the structural elements (II) and (III) are solely formed by $C_2$-units, solely formed by $C_4$-units or formed by a mixture thereof. Each $C_2$- and $C_4$-unit may either carry only hydrogen atoms, or hydrogen atoms and one methyl group. If a methyl group in a $C_2$- or $C_4$-unit is present, it is bound at a carbon atom in $\alpha$-position to an -O- unit, whereby each -O- unit carries in its $\alpha$-position not more than one methyl group carrying carbon atom.

Such elements are typically based on ethylene oxide monomers, propylene oxide monomers, tetrahydrofuran monomers or mixtures thereof. In case of propylene oxide based $-CHCH_3-CH_2-O-$ and tetrahydrofuran based $-CH_2-CH_2-CH_2-CH_2-O-$ units within formulas (II) and (III), it may be advantageous if the structural elements (II) and (III) contain at the border region of the respective element one or more $C_2$-based units without methyl groups. This can be easily achieved by firstly polymerizing propylene oxide or tetrahydrofuran and later stop the addition of propylene oxide and tetrahydrofuran, respectively, and supply ethylene oxide to finish the polymerization, leading to $C_2$-based units at both end sides. The obtained polyalkylene oxides can then be processed as described further down to form the structural units (II) and (III) in the polyalkylene oxide ester polymer. Due to the mentioned production process, ethylene oxide is co-polymerized with propylene oxide and tetrahydrofuran, respectively, causing an irregular structure in the border region in which $-CHCH_3-CH_2-O-$ and $-CH_2-CH_2-CH_2-CH_2-O-$ units, respectively, alternate with $-CH_2-CH_2-O-$ units, so that the transition

from $-CHCH_3-CH_2-O-$ and $-CH_2-CH_2-CH_2-CH_2-O-$ units, respectively, to $-CH_2-CH_2-O-$ units might not be sharp. Such effect is well known in the art and the respective alternating structure also often called "dirty structures".

Another particularly preferred polyalkylene oxide ester polymer contains the structural elements (I), (II) and (III) in which

- $R^{13}$, $R^{19}$ represent independent of each other a hydrogen atom or a methyl group,
- $R^9$, $R^{10}$, $R^{11}$, $R^{14}$, $R^{15}$, $R^{20}$, $R^{21}$, $R^{24}$ represent a hydrogen atom,
- g, h, i, j, n, o, p, q, t, u, v, w are 0,
- k, m, s, x are 1, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the remaining other carbon atom two hydrogen atoms, whereby each -O- unit carries not more than one methyl group carrying carbon atom in $\alpha$-position.

This particularly relates to a respective polymer in which the structural elements (II) and (III) are solely formed by $C_2$-units based on ethylene oxide and propylene oxide.

The number of the structural elements (II) in the polyalkylene oxide ester polymer is 1 to 25, preferably $\geq 2$, more preferably $\geq 3$, particularly preferably $\geq 4$, very particularly preferably $\geq 5$ and most preferably $\geq 6$, and preferably $\leq 23$, more preferably $\leq 22$, particularly preferably $\leq 20$ and very particularly preferably $\leq 17$. The total number of the elements (I) and (II) is adapted such that the total number of the ester groups does not exceed the maximum number of the ester groups specified for the polyalkylene oxide ester polymer.

Since the formation of ester groups by the elements (I), (II) and (III) require an -O- unit at the edge of one element and a -CO- unit at the edge of the other element, the total number of such -O- units and -CO- units in the elements from which the polyalkylene oxide ester polymer is formed is preferably adjusted such that the intended amount

of ester groups are formed. A possible surplus of -O- units or -CO- units can, for example, be bound to end groups or to other structural element of the polymer. Since the numbers of -O- units and -CO- units in element (I) are already balanced and element (II) only provides -CO- units, element (III) is preferably present in a number suitable to form ester bonds with the -CO- units of the structural elements of the formulas (I) and (II). More preferably, the ratio between the number of elements (II) and the number of elements (III) is 0.8 to 1.2, particularly preferably $\geq$ 0.9 and very particularly preferably $\geq$ 0.95, and particularly preferably $\leq$ 1.1 and very particularly preferably $\geq$ 1.05, and most preferably 1. The surplus of -O- units or -CO- units can, for example, be bound to end groups or other structural elements.

Since the polyalkylene oxide ester polymers of the invention are advantageously produced by esterification of monomers, it is favorable to use monomers which are easily available. Suitable monomers are particularly monomers which already comprise the structural element (I), in which, for example, the monomer of the element (I) contains a hydroxy group at the one edge, as a precursor for the -O- unit, and a carboxylic acid, carboxylic acid alkyl ester or carboxylate (such as for example -COONa) group at the one edge, as a precursor for the -CO- unit. Even though monomers of element (I) can be prepared in a high amount and high purity, it is easier to obtain a mixture of monomers of elements (I), (II) and (III). Consequently, polyalkylene oxide ester polymers based on such a mixture contain the elements (I), (II) and (III). Based on the composition of such monomer mixtures, a polyalkylene oxide ester polymer with a ratio of the number of the structural elements (I) to the number of the structural elements (II) of 0.5 to 8 is preferred, a ratio of 0.7 to 6 more preferred and a ratio of 0.85 to 4.7 particularly preferred.

As already mentioned before, the polyalkylene oxide ester polymer of the invention can, beside end groups, also contain further polyalkylene oxide elements other than (I), (II) and (III), or even other structural elements. Further polyalkylene oxide elements other than (I), (II) and (III) may, for example, be elements with an alkylene unit which has more than six carbon atoms in the direct chain between two ether groups. Other structural elements can, for example, be based on diols other than structural element (III), on dicarboxylic acids other than structural element (II), or on alpha-hydroxy-omega carboxylic acids other than structural element (I), e.g. sebacic acid or terephthalic acid. The structural elements (I), (II) and (III) generally constitute 50 to 100%, preferably 70 to 100%, more preferably 80 to 100%, particularly preferably 90 to 100%, very particularly preferably 95 to 100%, and most preferably 98 to 100% of the number average molecular weight $M_n$ of the polyalkylene oxide ester polymer. The nature of the structural elements, and thus the composition of the polyalkylene oxide ester polymer can, for example, be determined by hydrolyzing the ester bonds and analyzing the structural units with common analytical methods such as gaschromatography, HPLC, NMR and the like.

Due to the presence of end groups at both sides of the polymer, the amount of the structural elements (I), (II) and (III) is typically at least slightly below 100% of the number average molecular weight $M_n$ of the polyalkylene oxide ester polymer, even if the polymer does not contain other elements than (I), (II) and (III). However, particularly in case of-OH groups as end groups, the numerical effect due to the very low molecular mass of the hydrogen atom compared with the molecular mass of the polyalkylene oxide ester polymer is so small that a 100% value can be achieved under consideration of the accuracy of the analytical measurement.

Although elements other than the elements (I), (II) and (III) may be present in the polyalkylene oxide ester polymer, it preferably contains only the elements (I), (II) and (III) plus two end groups.

Particularly preferred polyalkylene oxide ester polymers A) to D) based on the structural elements (I), (II) and (III) are the following polymers, whereby their radicals and indices relate to the formulas (I), (Ic), (II), (IIc), (III) and (IIIc):
A)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$, $R^6_{x\alpha}$ | are | H |
| $b_{x\alpha}$ $c_{x\alpha}$, $d_{x\alpha}$, $ex_{\alpha}$ | are | 0 |
| Xn | is | 4 to 100 |
| k, m | are | 1 |
| $R^{11}$, $R^{13}$ | are | H |

(continued)

| | | |
|---|---|---|
| g, h, i, j, n, o, p, q | are | 0 |
| $g_{y\beta}$, $l_{y\beta}$ | are | 1 |
| $R^7_{y\beta}$, $R^{12}_{y\beta}$ | are | H |
| $h_{y\beta}$, $i_{y\beta}$, $j_{y\beta}$, $k_{y\beta}$ | are | 0 |
| Yn | is | 3 to 99 |
| s, x | are | 1 |
| $R^{19}$, $R^{24}$ | are | H |
| t, u, v, w | are | 0 |
| $s_{z\gamma}$, $x_{z\gamma}$ | are | 1 |
| $R^{19}_{z\gamma}$, $R^{24}_{z\gamma}$ | are | H |
| $t_{z\gamma}$, $u_{z\gamma}$, $v_{z\gamma}$, $w_{z\gamma}$ | are | 0 |
| Zn | is | 4 to 100 |
| ratio of number of (I) / number of (II) | is | 0.5 to 8 |
| Percentage of molecular weight of (I)+(II)+(III) based on number average molecular weight $M_n$ of polyalkylene oxide ester polymer | is | 95 to 100 |
| End groups | | -OH or -COOH |

B)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$ | are | H or methyl |
| $R^6_{x\alpha}$ | is | H |
| $b_{x\alpha}$, $c_{x\alpha}$, $d_{x\alpha}$, $e_{x\alpha}$ | are | 0 |
| Xn | is | 4 to 100 |
| k, m | are | 1 |
| $R^{11}$, $R^{13}$ | are | H |
| g, h, i, j, n, o, p, q | are | 0 |
| $g_{y\beta}$, $l_{y\beta}$ | are | 1 |
| $R^7_{y\beta}$ | are | H or methyl |
| $R^{12}_{y\beta}$ | is | H |
| $h_{y\beta}$, $i_{y\beta}$, $j_{y\beta}$, $k_{y\beta}$ | are | 0 |
| Yn | is | 3 to 99 |
| s, x | are | 1 |
| $R^{19}$, $R^{24}$ | are | H |

(continued)

| | | |
|---|---|---|
| t, u, v, w | are | 0 |
| $s_{z\gamma}$, $x_{z\gamma}$ | are | 1 |
| $R^{19}_{z\gamma}$ | are | H or methyl |
| $R^{24}_{z\gamma}$ | is | H |
| $t_{z\gamma}$, $u_{z\gamma}$, $v_{z\gamma}$, $w_{z\gamma}$ | are | 0 |
| Zn | is | 4 to 100 |
| ratio of number of (I) / number of (II) | is | 0.5 to 8 |
| Percentage of molecular weight of (I)+(II)+(III) based on number average molecular weight $M_n$ of polyalkylene oxide ester polymer | is | 95 to 100 |
| End groups | | -OH or -COOH |

C)

| | | |
|---|---|---|
| $M_w$ [g/mol] | is | 500 to 50 000 |
| number of ether groups | is | 10 to 560 |
| number of ester groups | is | 2 to 51 |
| a | is | 1 |
| $R^1$ | is | H |
| b, c, d, e | are | 0 |
| $a_{x\alpha}$, $f_{x\alpha}$ | are | 1 |
| $R^1_{x\alpha}$ | are | H or ethyl |
| $R^6_{x\alpha}$ | is | H |
| $b_{x\alpha}$, $c_{x\alpha}$, $d_{x\alpha}$, $e_{x\alpha}$ | are | 0 |
| Xn | is | 4 to 100 |
| k, m | are | 1 |
| $R^{11}$, $R^{13}$ | are | H |
| g, h, i, j, n, o, p, q | are | 0 |
| $g_{y\beta}$, $l_{y\beta}$ | are | 1 |
| $R^7_{y\beta}$ | are | H or ethyl |
| $R^{12}_{y\beta}$ | is | H |
| $h_{y\beta}$, $i_{y\beta}$, $j_{y\beta}$, $k_{y\beta}$ | are | 0 |
| Yn | is | 3 to 99 |
| s, x | are | 1 |
| $R^{19}$, $R^{24}$ | are | H |
| t, u, v, w | are | 0 |
| $s_{z\gamma}$, $x_{z\gamma}$ | are | 1 |
| $R^{19}_{z\gamma}$ | are | H or ethyl |
| $R^{24}_{z\gamma}$ | is | H |
| $t_{z\gamma}$, $u_{z\gamma}$, $v_{z\gamma}$, $w_{z\gamma}$ | are | 0 |
| Zn | is | 4 to 100 |

(continued)

| | | |
|---|---|---|
| ratio of number of (I) / number of (II) | is | 0.5 to 8 |
| Percentage of molecular weight of (I)+(II)+(III) based on number average molecular weight $M_n$ of polyalkylene oxide ester polymer | is | 95 to 100 |
| End groups | | -OH or -COOH |

D)

| | | |
|---|---|---|
| $M_w$ [g/mol] | is | 500 to 50 000 |
| number of ether groups | is | 10 to 560 |
| number of ester groups | is | 2 to 51 |
| a, b, c | are | 1 |
| $R^1$, $R^2$, $R^3$ | are | H |
| d, e | are | 0 |
| $a_{x\alpha}$, $b_{x\alpha}$, $c_{x\alpha}$, $f_{x\alpha}$ | are | 1 |
| $R^1_{x\alpha}$, $R^2_{x\alpha}$, $R^3_{x\alpha}$, $R^6_{x\alpha}$ | are | H |
| $d_{x\alpha}$, $e_{x\alpha}$ | are | 0 |
| Xn | is | 4 to 100 |
| i, j, k, m, n, o | are | 1 |
| $R^9$, $R^{10}$, $R^{11}$, $R^{13}$, $R^{14}$, $R^{15}$ | are | H |
| g, h, p, q | are | 0 |
| $g_{y\beta}$, $h_{y\beta}$, $i_{y\beta}$, $l_{y\beta}$ | are | 1 |
| $R^7_{y\beta}$, $R^8_{y\beta}$, $R^9_{y\beta}$, $R^{12}_{y\beta}$ | are | H |
| $j_{y\beta}$, $k_{y\beta}$ | are | 0 |
| Yn | is | 3 to 99 |
| s, t, u, x | are | 1 |
| $R^{19}$, $R^{20}_{z\gamma}$, $R^{21}_{z\gamma}$, $R^{24}$ | are | H |
| v, w | are | 0 |
| $s_{z\gamma}$, $t_{z\gamma}$, $u_{z\gamma}$, $x_{z\gamma}$ | are | 1 |
| $R^{19}_{z\gamma}$, $R^{20}_{z\gamma}$, $R^{21}_{z\gamma}$, $R^{24}_{z\gamma}$ | are | H |
| $v_{z\gamma}$, $w_{z\gamma}$ | are | 0 |
| Zn | is | 4 to 100 |
| ratio of number of (I) / number of (II) | is | 0.5 to 8 |
| Percentage of molecular weight of (I)+(II)+(III) based on number average molecular weight $M_n$ of polyalkylene oxide ester polymer | is | 95 to 100 |
| End groups | | -OH or -COOH |

Regarding the polyalkylene oxide ester polymers mentioned under B) above, the radicals $R^1_{x\alpha}$, $R^7_{y\beta}$ and $R^{19}_{z\gamma}$ at or near the two borders of the X, Y and Z units are preferably H, whereas the radicals $R^1_{x\alpha}$, $R^7_{y\beta}$ and $R^{19}_{z\gamma}$ in the rest of the X, Y and Z units are preferably methyl. This is based on the preparation of such elements, which typically start with a polymerization of propylene oxide on which at the end ethylene oxide is co-polymerized.

Regarding the polyalkylene oxide ester polymers mentioned under C) above, the radicals $R^1_{x\alpha}$, $R^7_{y\beta}$ and $R^{19}_{z\gamma}$ at or near the two borders of the X, Y and Z units are preferably H, whereas the radicals $R^1_{x\alpha}$, $R^7_{y\beta}$ and $R^{19}_{z\gamma}$ in the rest

of the X, Y and Z units are preferably ethyl. This is based on the preparation of such elements, which typically start with a polymerization of 1,2-butylene oxide on which at the end ethylene oxide is co-polymerized.

The polyalkylene oxide ester polymers of the invention are characterized by application properties which are similar or even better than the application properties of conventional polyalkylene oxide polymers such as polyethylene glycols, polypropylene glycols, ethylene oxide, n-butylene oxide, or polytetrahydrofuran block polymers, but are superior in their biodegradability. Normally, the biodegradability of many polymers declines with increasing molecular weight. This also applies for conventional polyalkylene oxide polymers. For example, conventional high molecular polyethylene oxide polymers with a weight average molecular weight $M_w$ of 6000 g/mol or higher are difficult to degrade in a natural way. Surprisingly, the polyalkylene oxide ester polymers of the invention are significantly better biodegradable, even at a high weight average molecular weight $M_w$, as for example of more than 10 000 g/mol for polyethylene oxide polymers. Nevertheless, they can easily substitute conventional polyalkylene oxide polymers in their applications such as for the encapsulation of fragrances or in the preparation of graft polymers for its use in homecare and laundering applications.

Biodegradability is the ability of organic substances to be broken down into simpler substances through the action of enzymes from microorganisms. The degradation process consumes oxygen and produces carbon dioxide. Both can be measured by certain tests. Worldwide accepted tests have been published in the OECD 301 guideline for testing of chemicals. Depending on the specific test method, dissolved organic carbon (DOC), carbon dioxide evolution or the oxygen consumption is measured over time during the degradation under standardized conditions.

Based on OECD measurements, the polyalkylene oxide ester polymer of the invention can usually be biodegraded by 70 to 90% within one month, even with a weight average molecular weight $M_w$ of 20 000 g/mol, whereas conventional polyalkylene oxide polymers only reach values of less than 20% or even less than 10%.

The polyalkylene oxide ester polymer of the invention can easily be prepared by esterification of blocks of the respective structural elements of which the polymer is to be build, whereas the blocks to be esterified contain, if intended as end group in the polyalkylene oxide ester polymer, at least one esterifiable end group in the block, and, if intended as a middle group in the polyalkylene oxide ester polymer, two esterifiable end groups in the block. In principle, as esterifiable end groups, basically groups typically known as esterifiable groups can be used. However, esterifiable end groups forming the -O- part in the later -COO- ester group are, for example, -OH, and esterifiable end groups forming the -CO- part in the later -COO- ester group are, for example, -COOH, -COOR in which R is a hydrocarbon group with 1 to 12 C-atoms, as for example a $-COOCH_3$ group, or carboxylates in which the cation are preferably alkali metals such as sodium or potassium, and preferably -COOH and -COONa.

For the sake of completeness, it is explicitly mentioned that in principal also polyalkylene oxide ester polymers with a weight average molecular weight $M_w$ higher than 50 000 g/mol, such as 100 000 g/mol or even much higher, can easily be prepared by esterification of the respective blocks.

In that context, a preferred process for the preparation of a polyalkylene oxide ester polymer of the invention was found, in which polyalkylene oxide comprising the structural element (I) and having one primary OH and one COOH end group, or a mixture of such polyalkylene oxides, is esterified at a temperature of 50 to 250°C and a pressure of 0.1 kPa abs to 1 MPa abs in the presence of an esterification catalyst.

Polyalkylene oxides comprising the structural element (I) and having one primary OH and one COOH end group can be synthesized in different ways. One possibility is to partially oxidize the respective polyalkylene oxide having two primary OH end groups and to separate the polyalkylene oxide component having one primary OH and one COOH end group (called "monoacid") for example by vacuum distillation from the unconverted polyalkylene oxide having two OH end groups (called "diol") and the fully oxidized polyalkylene oxide having two COOH end groups (called "diacid"). Another possibility is to specifically synthesize the polyalkylene oxide having one primary OH and one COOH end group, for example, by adding sodium metal and bromoacetic acid to polyalkylene oxide and processing the obtained sodium carboxylate end group to the respective carboxylic acid end group. However, both ways are elaborate in terms of their process steps, be it by a vacuum distillation or complex synthesis steps, but they may be justified if a polyalkylene oxide ester polymer with a high content of structural unit (I) is wanted.

Furthermore, another and more preferred process for the preparation of the polyalkylene oxide ester polymer of the invention was found, in which

a) a polyalkylene oxide comprising the structural element (I) and having one primary OH and one COOH end group, or a mixture of such polyalkylene oxides,
b) a polyalkylene oxide comprising the structural element (II) and having two COOH end groups, or a mixture of such polyalkylene oxides, and
c) a polyalkylene oxide comprising the structural element (III) and having two primary OH end groups, or a mixture of such polyalkylene oxides,

are esterified at a temperature of 50 to 250°C and a pressure of 0.1 kPa abs to 1 MPa abs in the presence of an esterification catalyst.

It was further recognized according to the invention that a mixture of the components a) to c) can easily be produced by partial oxidation of the respective polyalkylene oxide having two primary OH end groups. Such partial oxidation is described further below. For the sake of completeness, it is mentioned that the mixture of the components a) to c) can, of course, also be prepared by mixing of the individual components.

As the ester groups in the polyalkylene oxide ester polymer are typically formed by esterification of polyalkylene oxide blocks having esterifiable end groups, and each ester group requires one -O- containing end group such as an -OH group, and one -CO- containing end group such as a -COOH group, it is favorable that their amounts are equal or approximately equal. A small surplus of one type can, however, be absorbed by elements other than (I), (II) and (III) which are able to link to the -O- or -CO- groups. Additionally, the two end groups of the polyalkylene oxide ester polymer may also bind two of such groups. Based on this, the ratio of the number of the OH end groups to the number of the COOH end groups is preferably 0.9 to 1.1, more preferably ≥ 0.95, particularly preferably ≥ 0.98 and more particularly preferably ≥ 0.99, and more preferably ≤ 1.05, particularly preferably ≤ 1.02 and more particularly preferably ≤ 1.01.

The esterification of the respective polyalkylene oxide blocks can generally be performed in a manner industrially known and, for example, described in US 6,310,235 or US 5,324, 853. The educts are esterified in the presence of an esterification catalyst and the educts are preferably provided such that the ratio of the number of the OH end groups to the number of the COOH end groups is within the objected range.

Usually, different types of esterification catalysts can be used. They can roughly be divided into acidic, amphoteric and basic catalysts. As representatives of acidic catalysts, mineral acids such as sulfuric acid and phosphoric acids, and organic sulfonic acids such as methanesulfonic acid and p-toluenesulfonic acid, trifluormethansulfonsäure are mentioned. Further acidic catalysts can also be acidic solids such as zeolites, especially Ti-zeolites, diverse oxides, mixed metal oxides, sulfated oxides, acid ion exchange resins, protonic heteropolyoxoanions, salts of heteropolyoxoanions, acid clays and phosphates. Representatives of basic catalysts are, for example, ZnO, $La_2O_3$, $ThO_2$, $ZrO_2$, hydrotalcites, hydroxyapatites, alkali metal oxides, alkaline earth metal oxides, basic zeolites and solid superbases like Verkade bases or guanidines. As possible amphoteric catalysts oxides of zinc(II), tin (II) and tin(IV) are mentioned. Furthermore, lewis acidic catalysts derived from group 4 metal cations of the Periodic Table of the Elements, e.g. Ti and Zr compounds, such as Ti(VI) and Zr(IV), derived from group 3 metal cations of the Periodic Table of the Elements, e.g. Sc(III) compounds, or group 5 metal cations of the Periodic Table of the Elements, e.g. Al(III) compounds, are also useful. However, also catalysts containing metal cations of group 12 and 15 of the Periodic Table of the Elements, such as Sn(IV), Sn(II), Zn(II) and Bi(III) are mentioned. The corresponding anions can typically be chosen from alkoxylates such as isopropoxylates and isobutyrates alkanoate, aralkylcarboxylates, halogen, sulfate, organic sulfonates such as p-toluolsulfonates or methansulfonate, amidomethansulfonate, trifluormethansulfonate or triflourmethansulfonimide.

The esterification catalysts are typically used in a customary amount in the range of 0.02 to 10 wt.-%, preferably ≥ 0.05 wt.-% and more preferably ≥ 0.1 wt.-%, and preferably ≤ 5 wt.-% and more preferably ≤ 2 wt.-%, based on the sum of the compounds to be esterified.

The esterification can be carried out in the absence or in the presence of a solvent. If it is carried out in the presence of a solvent, an organic solvent that is inert under the reaction conditions is preferably used. These include, for example, aliphatic hydrocarbons, halogenated aliphatic hydrocarbons, aromatic and substituted aromatic hydrocarbons or ethers. Preferably, the solvent is selected from pentane, hexane, heptane, ligroin, petroleum ether, cyclohexane, benzene, toluene, xylene, chlorobenzene, dichlorobenzenes, dibutyl ether, tetrahydrofuran, dioxane and mixtures thereof. Suitable solvents forming an azeotrope with water are aromatic hydrocarbons, e.g. benzene, alkyl aromates, toluene or xylenes. Also halogenated compounds with suitable high boiling points are useful.

The esterification is effected at a temperature of 50 to 250°C, preferably ≥ 70°C and more preferably ≥ 80°C, and preferably ≤ 220°C and more preferably ≤ 200°C. If the esterification catalyst is an organic acid or mineral acid, the esterification is usually carried out at a temperature range of 50 to 160°C. If the esterification catalyst is a metal containing catalyst, the esterification is usually carried out at a temperature range of 80 to 250°C. With regard to the pressure, the esterification can be performed at a wide pressure range from vacuum to a pressure above atmospheric pressure, ranging from 0.1 kPa abs to 1 MPa abs. Preferably, it is performed at ≤ 0.5 MPa abs and more preferably at ≤ 0.2 MPa abs.

The esterification can take place in the absence or in the presence of an inert gas. An inert gas is generally understood as meaning a gas which, under the stated reaction conditions, does not enter into any reactions with the starting materials, reagents, solvents or the resulting products involved in the reaction.

Suitable reactors for performance of the process of the esterification are in principle all reactors suitable for esterification reactions. Examples include stirred tanks.

Mainly depending on the nature of the educt, the type and amount of the catalyst and the reaction temperature, the esterification typically requires a reaction time of 1 to 24 hours, more typically 2 to 12 hours.

The obtained polyalkylene oxide ester polymer is typically but not necessarily worked up, depending on the intended purity. In case of a workup, components other than the polyalkylene oxide ester polymer are usually removed, particularly the esterification catalysts. Polyalkylene oxide ester polymer free of esterification catalysts are generally important for the product quality. Heterogenous catalysts can typically be removed by physical methods like filtration or

centrifugation. Homogenous catalysts can typically be removed by the use of stationary ionic exchanging units.

The molecular mass of the polyalkylene oxide ester polymer can be easily adjusted by the ratio of the OH to COOH end groups of the compounds to be esterified. Simply spoken, the more the ratio deviates from an exact 1:1 ratio, the fewer ester groups are formed in polyalkylene oxide ester polymer. Practically, this can, for example, be done by addition of a diol component or a diacid component, ideally of the one of the educts to the reaction mixture. However, the addition of other monools or monocarboxylic acid fulfill also the purpose.

The end groups of the polyalkylene oxide compounds which are not esterified with other polyalkylene oxide compounds typically form the end groups of the polyalkylene oxide ester polymer of the invention. Thus, not esterified -OH end groups of the polyalkylene oxide compounds lead to -OH end groups of the polyalkylene oxide ester polymer and not esterified -COOH, -COOR or -COOM end groups of the polyalkylene oxide compounds to -COOH, -COOR or -COOM end groups of the polyalkylene oxide ester polymer, whereby R is typically a hydrocarbon group with 1 to 12 C-atoms such as a methyl group, and M typically an alkali metal such as sodium or potassium.

For the sake of completeness, it is mentioned that beside the blocks containing the structural elements (I), or the structural elements (I) to (III), also other elements with esterifiable end groups can be present, particularly if a polyalkylene oxide ester polymer is to be produced which also shall contain such other elements. Examples of such other elements are polyalkylene oxide elements with an alkylene unit which has more than six carbon atoms in the direct chain between two ether groups.

As already mentioned before, mixtures of the components a) to c) comprising the so called "monoacid", "diacid" and "diol" can easily be produced by partial oxidation of the respective polyalkylene oxide having two primary OH end groups ("diol"). This also enables the way to obtain polyalkylene oxide comprising the structural element (I) and having one primary OH and one COOH end group (the so called "monoacid"), or a mixture of such polyalkylene oxides, in a higher concentration by separating off at least parts of the other components (the so called "diacid" and "diol"), if a polyalkylene oxide ester polymer with a higher content of the structural element (I) is sought and thus increases the flexibility.

In a preferred process, the polyalkylene oxide used in the esterification comprising the structural element (I) and having one primary OH and one COOH end group, or a mixture of such polyalkylene oxides, has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold.

Depending on the intended composition and structure of the polyalkylene oxide ester polymer, the polyalkylene oxide comprising the structural element (I) and having one primary OH and one COOH end group, or a mixture of such polyalkylene oxides, which has been prepared by partial oxidation as described above, can, of course, be blended with other components such as polyalkylene oxide comprising the structural element (II) and having two COOH end groups, polyalkylene oxide comprising the structural element (III) and having two OH end groups, any other polyalkylene oxides having OH and/or COOH groups, or any other esterifiable structural elements.

In a more preferred process, the mixture of the components a) to c) used in the esterification has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold, and the oxidation reaction been stopped after a ratio of the number of the OH end groups to the number of the COOH end groups in the range of 0.9 to 1.1 has been reached.

The respective polyalkylene oxide having two primary OH end groups to be used as starting material for the partial oxidation can easily be prepared by methods known in the art. The oxidation of a OH end group to a COOH end group requires the existence of a primary OH group. For example, polyethylene oxides can advantageously be prepared by polymerization of ethylene oxide. Similarly, polypropylene oxides and poly-1,2-butylene oxides can advantageously be prepared by polymerization of propylene oxide and 1,2-butylene oxide, respectively, but due to the existence of a secondary OH group at one end, ethylene oxide is usually copolymerized at the end of the polymerization to form ethylene oxide units at the outer region, whereas the inner region comprises propylene oxide and 1,2-butylene oxide units, respectively. Furthermore, polytetrahydrofuran can advantageously be prepared by polymerization of tetrahydrofuran.

The partial oxidation process is conducted in the presence of water. Water promotes the oxidation of the -OH end groups into -COOH end groups in various ways. For instance, water, in the case of use of a suspension catalyst, improves the suspension thereof in the reaction mixture and additionally also lowers the viscosity of the reaction mixture. The concentration of water in the liquid phase is preferably kept at 50 to 95 wt.-%, preferably ≥ 60 wt.-%, and preferably ≤ 90 wt.-% and more preferably ≤ 80 wt.-%.

The catalyst used in the partial oxidation process is a heterogeneous catalyst comprising platinum, palladium or gold, and preferably platinum as active component. Typically, the active metals are fixed on a support. A wide variety of different materials may be used as support. Examples include inorganic oxides, for instance aluminum oxide, zirconium oxide, titanium dioxide, silicon oxide, inorganic silicates, for instance aluminum silicate, or charcoal. It is of course also

possible to use mixtures of different support materials. Preference is given to the use of charcoal as support.

The preferred catalyst with platinum as active component comprises generally 0.1% to 10% by weight, preferably ≥ 0.5% by weight, more preferably ≥ 1% by weight and even more preferably ≥ 4% by weight, and preferably ≤ 8% by weight and more preferably ≤ 6% by weight, of platinum, based in each case on the total mass of the heterogeneous catalyst. More preferably, a heterogeneous catalyst comprising 1 to 10 wt.-% and particularly 4 to 10 wt.-% of platinum on charcoal is used.

The catalyst to be used may also comprise further metals as well as platinum, palladium or gold. The term "further metals" is understood to mean metals from the fourth to sixth periods of groups 3 to 16 of the Periodic Table of the Elements, beginning with scandium (atomic number 21) and ending with polonium (atomic number 84). Preferably, the total content of further metals is 0 to 100 wt.-%, preferably 0 to 30 wt.-%, more preferably 0 to 10 wt.-%, even more preferably 0 to 1 wt.-% and especially 0 to 0.1 wt.-%, based on the mass of platinum. In particular, the total content of cadmium, lead and bismuth is preferably 0 to 1 wt.-%, more preferably 0 to 0.5 wt.-%, especially preferably 0 to 0.1 wt.-%, even more preferably 0 to 0.05 wt.-% and especially 0 to 0.01 wt.-%, based on the mass of platinum. The catalyst is thus preferably prepared without deliberate addition of further metals.

The heterogeneous supported catalyst can be used in various geometric shapes and sizes, for instance as powder or shaped bodies. Pulverulent catalysts may be operated, for example, in suspension mode. In the case of a fixed bed mode, preference is given to using shaped bodies, for example pellets, cylinders, hollow cylinders, spheres or extrudates or tablets. The shaped bodies in that case are typically fixed in the reactor by the known methods. In the case of shaped catalyst bodies, these preferably have an average particle size of 1 to 10 mm.

However, preference is given to using the catalyst in the form of a powder. In that case, the pulverulent catalyst is in suspension in the reactor. In order to prevent discharge from the reaction system, a filter is typically used here to retain the suspension catalyst. One example of a customarily used filter is the crossflow filter.

Irrespective of the geometric shape and size of the catalyst particles, the platinum is generally in the form of particles having an average diameter of 0.1 to 50 nm, measured via x-ray diffraction. However, there may also be smaller or larger particles.

In the production of the heterogeneous supported catalyst, the platinum is generally applied to the support by suitable methods such as those described in US 2020/017,745.

The heterogeneous supported catalyst generally has a BET surface area of ≥ 1 $m^2/g$ and ≤ 10 000 $m^2/g$, determined to DIN ISO 9277:2014-01. When carbon is used as support, the BET surface area is preferably in the range of ≥ 500 $m^2/g$ and ≤ 10 000 $m^2/g$.

The preferred platinum based catalyst is typically applied in an amount of 0.1 to 50 mg platinum per g of the polyalkylene oxide to be partially oxidized, preferably ≥ 1 mg and preferably ≤ 20 mg.

Since the polyalkylene oxide feedstock is pH-neutral in aqueous solution, the pH on commencement of the oxidation is typically at or close to 7. As a result of the formation of the COOH groups, there is a gradual fall in the pH, and so there is generally a value of 1 or 3 toward the end of the oxidation.

However, the partial oxidation can also be performed in the presence of a base, such as sodium or potassium hydroxide. A basic condition increases the oxidation potential and leads to the formation of carboxylic acid salts (carboxylates) instead of carboxylic acids. As already mentioned before in the description of the esterification process, also carboxylates can be directly used in the esterification.

In case of the absence of basic compounds, there is direct formation of the carboxylic acids. This saves (i) the use of additional chemicals (base and extraneous acid), and (ii) the disposal of the salt formed from the base and the extraneous acid.

The oxidation medium used in the partial oxidation process is molecular oxygen. Oxygen is added either in pure form or diluted with other gases, for example in the form of air or an $O_2/N_2$ mixture. Preferably an oxygen gas having a content of ≥ 90% by volume, more preferably of ≥ 95% by volume, even more preferably of ≥ 99% by volume and especially of ≥ 99.5% by volume is used. The use of very highly concentrated or pure oxygen makes it possible to keep the amount of offgas relatively small.

In order to promote the distribution of the oxygen in the reactor, it may be advantageous to meter it in in the form of fine bubbles, for example through a frit.

The partial oxygen pressure present in the oxidation is 0.01 to 2 MPa, preferably ≥ 0.02 MPa and more preferably ≥ 0.05 MPa, and preferably ≤ 1 MPa and more preferably ≤ 0.3 MPa.

The oxidation is effected at a temperature of 20 to 100°C, preferably ≥ 30°C and more preferably ≥ 40°C, and preferably ≤ 80°C and more preferably ≤ 70°C.

Suitable reactors for performance of the partial oxidation process are in principle all reactors suitable for the performance of exothermic gas/liquid reactions. Examples include stirred tanks, trickle bed reactors and bubble column reactors. In order to remove the heat of reaction, the reactors are typically equipped with a cooling device. According to the reactor type and nature of the catalyst, the cooling device advantageously comprises cooling elements within the reactor or cooling elements in an external circuit outside the reactor. For example, a stirred tank preferably comprises

internal cooling elements, whereas it is more advantageous in a bubble column, for example, to integrate the cooling elements in the external circuit.

If the catalyst is in the form of a shaped body, this is typically fixed in the reactor in the form of a fixed bed. For this purpose, the trickle bed reactor is a particularly useful option, in which the catalyst can be introduced in the form of a bed. But it is possible to use shaped catalyst bodies in a stirred tank reactor. In this case, it is then advantageous to fix the shaped catalyst bodies in a compartment, for example a wire basket.

In the case of the preferred use of a pulverulent catalyst, it is advantageously in suspended form in the reaction mixture. Preferred reactors for the purpose are, for example, stirred tanks or bubble columns. In order to prevent the pulverulent catalyst from settling out, corresponding mixing of the liquid reaction mixture is required. In a stirred tank, this is typically achieved by use of a stirrer. In the case of a bubble column, the mixing is usually achieved via an external circuit with a conveying pump. In principle, the bubble column, with regard to the liquid circuit, can be operated either in upward direction or in downward direction, but operation in downward direction is typically more advantageous.

In the partial oxidation process, either semicontinuous or continuous operation is possible. In both cases, the oxygen, for assurance of the desired partial pressure, is fed to the reactor continuously or at least intermittently, but preferably continuously.

In the semicontinuous mode of operation, prior to commencement of the reaction, the reactor is initially charged with the complete amount of aqueous reactant mixture together with catalyst and, during the oxidation reaction, no fresh reactant is supplied, nor is any liquid reaction mixture withdrawn. The reactor is not emptied until after the oxidation reaction has ended.

In the continuous mode of operation, there is likewise liquid reaction mixture together with catalyst present in the reactor, but there is constant withdrawal of a small amount of liquid reaction and supply of corresponding amount of aqueous reactant. If a suspension catalyst has been used here, the liquid reaction mixture is advantageously removed from the reactor via a filter device, for example a crossflow filter.

As the partially oxidized polyalkylene oxide shall in any event contain polyalkylene oxide having one primary OH and one COOH end group, the oxidation reaction has to be conducted in a way that a portion of the primary OH groups remains unoxidized whereas others are already oxidized to COOH groups. This can easily be achieved by stopping the oxidation reaction at a degree of oxidation in which the desired amount of the partially oxidized polyalkylene oxide is present. Except for low molecular weight polyalkylene oxides with a molecular weight of only a very few hundred g/mol, the probability that a primary OH group is oxidized to a COOH group is independent of whether the other end group of the polyalkylene oxide has already been oxidized or not. At the beginning of the oxidation, polyalkylene oxide having one primary OH and one COOH end group (called "monoacid") is primarily formed. With an increasing amount of it, the probability that also the other OH group is oxidized increases, so that then also polyalkylene oxide having two COOH end groups (called "diacid") is formed.

In case of a semicontinuous mode of operation, the easiest way to stop a further oxidation is to timely stop the supply of oxygen. The oxygen present in the reactor would at least be consumed. Additional actions which can be combined with such a stop of the oxygen supply are, for example, the additional supply of an inert gas in order to replace a part of the oxygen in the reactor, the lowering of the total pressure in the reactor which automatically causes a decrease of the partial oxygen pressure, or the cooling of the reaction liquid, e.g. by withdrawing it from the reactor through a cooling unit. However, the most effective measure is to stop the oxygen supply.

Such an interference in the progress of the oxidation reaction is very easily controllable since the oxidation reaction takes many hours to proceed, so that there is a sufficiently long time frame in which the "monoacid" is present in a large concentration. The time frame in which the partial oxidation reaction is to be stopped, can be determined in various ways. Firstly, the required time for the partial oxidation under specified conditions, such as temperature, oxygen partial pressure, nature and amount of catalyst, etc., can be determined in preliminary tests in which the oxidation is stopped at different times and the reaction product analyzed for its composition. The oxidation time which is required for obtaining the intended composition can then be estimated. Another possibility to control the partial oxidation is to measure the amount of oxygen provided to the reactor as a measure of the oxygen absorbed by the oxidation. The degree of oxidation can then be calculated by the amount of OH groups present in the educt polyalkylene oxide and the stoichiometry of their oxidation to COOH groups. A further way is to take samples over time and to analyze them, e.g. by determining the acid number by titration as a measure of the COOH groups already formed. And last but not least, also physical in-situ measurements like the measurement of the electrical conductivity, of the dielectric constant or of the impedance are mentioned, which, of course, have to be calibrated in advance.

In case of a continuous mode of operation, the degree of oxidation can easily be adjusted by the residence time of the mixture in the reactor under reaction conditions.

As already mentioned above, oxidation reaction takes many hours. For a partial oxidation of around 50% of the OH groups, the typical reaction time is around 3 to 20 hours, preferably $\geq$ 4 hours and more preferably $\geq$ 5 hours, and preferably $\leq$ 18 hours and more preferably $\leq$ 15 hours.

For the sake of completeness, it is to mention that beside the oxidation of the OH groups to COOH groups as

the main reaction also an oxidative degradation takes place in a small degree. In such an oxidative degradation a small amount of alkylene oxide units may be totally oxidized. This inevitably causes a small decrease of the medium chain length of the partially oxidized alkylene oxide compared with the educt alkylene oxide before the partial oxidation.

After the end of the reaction, the reaction mixture is typically removed from the reactor and separated from the catalyst. In the case of use of a suspension catalyst, the removal is sensibly by filtration. Alternatively, it is also possible to allow the suspension catalyst to settle out at the reactor base after the end of the reaction and to remove the supernatant liquid. It is also possible to separate the catalyst by use of a centrifuge. The catalyst removed can generally be reused without further workup. The water or at least a major portion of the water is typically removed by distillation, for example over a wiped film evaporator. The partially oxidized polyalkylene oxide can then be used in the esterification step.

The polyalkylene oxide ester polymer of the invention can broadly substitute conventional polyalkylene oxide polymers in their applications.

As preferred applications for the polyalkylene oxide ester polymer of the invention, the encapsulation of fragrances and its use as building blocks for the preparation of block polymers are mentioned.

Fragrances are often encapsulated to lower their vapor pressure in order to reduce the concentration released into the air because highly concentrated fragrances are often very intense in their smell, and to prolong the time during which the fragrances are released and so the time during which the product scents. Encapsulation is often performed by mixing the fragrance into the liquid, mostly molten polymer followed by a solidification by cooling the mixture. The polyalkylene oxide ester polymers of the invention enable a longer lifetime during which the products scent, even for polymers with a lower molecular weight.

Block polymers are polymers containing blocks of different structural units, particularly structural units of different types of polymers. One important group of block polymers are polymers which are formed by reaction of the end groups of the polyalkylene oxide ester polymers with compounds of monomeric or polymeric nature so that blocks of different polymeric units are formed in series. Another important group of block polymers are graft polymers. Graft polymers are polymers with side chains on a main polymer chain. The main polymer chain is also called backbone. The polyalkylene oxide ester polymers are preferably used to prepare such graft polymers. The polyalkylene oxide ester polymers of the invention can easily be grafted with side chain forming monomers similar or identical to conventional polyalkylene oxide polymers. Particularly graft polymers produced by grafting vinyl group based monomers such as vinyl acetate, vinyl laurate, vinyl alkylates or vinyl pyrrolidones are important graft polymers in homecare products and laundering applications. Graft polymers based on polyalkylene oxide ester polymers of the invention are described in more detail in the EP-application already cited at the beginning.

The products containing such polyalkylene oxide ester polymers or produced with such polyalkylene oxide ester polymers are significantly better biodegradable than similar products containing, or produced with conventional polyalkylene oxide polymers.

The polyalkylene oxide ester polymer of the invention is a new class of polymers which are able to substitute polyalkylene oxides, particularly polyethylene oxides, polypropylene oxides, poly-1,2-butylene oxides and polytetrahydrofuran, in their typical applications such as for the encapsulation of fragrances, and in the preparation of graft polymers for its use in homecare and laundering applications. Some of the application properties of the polyalkylene oxide ester polymers are even better than those of the conventional polyalkylene oxides. The greatest advantage of the new type of polymers is their significantly better biodegradability which can be an important contribution in protecting the environment, particularly since the polyalkylene oxide ester polymers can be easily substitute the conventional polyalkylene oxides in homecare and laundering applications. The polyalkylene oxide ester polymer are safe and durable in their applications.

Moreover, the polyalkylene oxide ester polymer of the invention can be easily produced in high yields from easily available starting materials in a two-step process.

## Examples

### Determination of the K-value

The K-value is determined by measuring the relative viscosity of dilute polymer solutions and is a relative measure of the average molecular weight. As the average molecular weight of the polymer increases for a particular polymer, the K-value tends to also increase. The K-value of the esterified mixtures were determined in a 3 wt.-% NaCl solution at 23°C and a polymer concentration of 1 wt.-% polymer according to the method of H. Fikentscher, described in "Cellulosechemie", 1932, 13, 58.

### Determination of $M_n$, $M_w$ and PD

The number average molecular weight $M_n$, the weight average molecular weight $M_w$ and the polydispersity

$M_w/M_n$ of the esterified mixtures were determined by gel permeation chromatography in tetrahydrofuran. As mobile phase (eluent), tetrahydrofuran comprising 0.035 mol/L diethanolamine was used. The concentration of the esterified polymers in tetrahydrofuran was 2.0 mg per mL. After filtration (pore size 0.2 μm), 100 μL of this solution were injected into a GPC system. Four different columns (heated to 60°C) were used for separation (SDV precolumn, SDV 1000A, SDV 100 000A, SDV 1 000 000A). The GPC system was operated at a flow rate of 1 mL per min. A DRI Agilent 1100 was used as the detection system. Poly(ethylene glycol) (PEG) standards (PL) having a molecular weight $M_n$ from 106 to 1 378 000 g/mol were used for the calibration.

Description of the OECD 301B degradation test

The biodegradation was tested in waste water in triplicate using the OECD 301B manometric respirometry method. 30 mg/mL test substance is inoculated into waste water taken from the waste water treatment plant of Mannheim (Germany) and incubated in a closed flask at 25°C for 28 days. The consumption of oxygen during this time is measured as the change in pressure inside the flask using an OxiTop C (WTW). Evolved $CO_2$ is absorbed using an NaOH solution. The amount of oxygen consumed by the microbial population during biodegradation of the test substance, after correction using a blank, is expressed as percentage of the theoretical oxygen demand ("ThOD").

Examples 1 to 10

In examples 1 to 10, polyalkylene oxides with two primary OH end groups (called "diol") were oxidized to mixtures containing at least a polyalkylene oxide with two COOH end groups (called "diacid") and a polyalkylene oxide with one primary OH and one COOH end group (called "monoacid"), and, optionally, also remaining polyalkylene oxide with two primary OH end groups. The mixtures were prepared as follows.

Platinum on charcoal (5.0 wt.-% Pt on C, water content: 59.7 wt.-%, 283 g, 29.2 mmol Pt) was suspended in a mixture of polyalkylene oxide comprising two primary OH end groups (details see table 1) and water (details see table 1), heated to 52°C and stirred at 800 rpm. Oxygen was passed through the stirred mixture (20 nL/h) via a glass tube, equipped with a glass frit and the temperature was allowed to rise to 60°C. Oxygen dosage and temperature were maintained for the period mentioned in table 1, the oxygen dosage was then stopped and the mixture was allowed to cool down to room temperature. Solids were separated from the liquid phase by filtration and the filter cake was washed with 500 mL of warm water. The washing water was mixed with the filtrate. Water was removed from the liquid mixture by distillation over a wiped film evaporator (overall height: 87.2 cm, diameter: 3.54 cm, wiped height: 43 cm, feed: 4.0 mL/min, 44°C, 1.8 kPa abs, 600 rpm). The sump product from the wiped film evaporator was analyzed. The content of OH-groups determined by determination of the hydroxy number, and the content of COOH-groups determined by determination of the acid number. The conversion of the polyalkylene oxides in the partial oxidation was derived from the acid number.

For the partially oxidized mixture based on the low molecular polyalkylene oxide with a $M_w$ value of 200 g/mol, the distribution of the diol, monoacid and diacid was determined by gaschromatography. For this, 0.1 g of a dried sample of the partially oxidized polyalkylene oxide was heated with 1 g of N-methyl-N-(trimethylsilyl)trifluoracetamide to 80°C and kept at this temperature for one hour. The resulting mixture was then analyzed via gaschromatography. For the other mixtures based on polyalkylene oxides with ≥ 400 g/mol, the distribution was calculated from the total content of the OH- and COOH-groups assuming that each OH-group, irrespective of whether being part of the diol or part of the mono-acid, is oxidized with the same probability. The respective values are shown in table 1.

Examples 11 to 21 and 22

Examples 11 to 21 relate to the esterification of the oxidized polyalkylene oxide mixtures obtained by examples 1 to 10 and the determination of the biodegradability of the obtained polyalkylene oxide ester polymers. Example 22 is a comparative example in which the biodegradability of a conventional polyethylene oxide ("PEG") was determined.

In examples 11 to 21, 98 g of a mixture of polyalkylene oxides obtained by the oxidation procedures described in examples 1 to 10, hereinafter referred to as educt mixture (details see table 2a and 2b), and 2 g water were mixed with an esterification catalyst (details see table 2a and 2b) and heated for a period of time mentioned in table 2a and 2b under vacuum at a pressure of 1 kPa abs, whereby the temperature was slowly increased from 125°C at the beginning to 145°C at the end.

The obtained esterified mixture was then analyzed, and the K-value, the number average molar mass $M_n$ and the molecular weight distribution $M_w$ determined as described above. The biodegradability was determined by the OECD 301B degradation test, which is described above.

The average numbers of the ester groups and the ether groups in the polyalkylene oxide ester polymer were estimated from the estimated averaged molecular weights of the respective polyalkylene oxide ester polymers and the

respective polyalkylene oxides used in the antecedent oxidation step. For the respective polyalkylene oxide ester polymers, the number average molecular weight $M_n$ was used since it is a good measure of the average molecular weight on a molecular scale. Regarding the respective polyalkylene oxides used in the antecedent oxidation step, the molecular average molecular weight $M_w$ could be alternatively used since the polyethylene oxides typically have a low polydispersity PD slightly above 1, so that $M_w$ and $M_n$ only slightly differ.

The number of the ester groups in the polyalkylene oxide ester polymers, which were based on the use of partially oxidized polyethylene oxides (relating to a ratio of the oxidized OH groups of around 50%), was estimated as follows. First, the number of the structural units was estimated by dividing (1) the number average molecular weight $M_n$ of the polyalkylene oxide ester polymer, which has been corrected by 18 g/mol considering the two end groups, (2) by the average molecular weight of the esterified structural elements. The latter was calculated by the molecular average molecular weight $M_w$ of the used polyethylene oxide minus 18 g/mol, considering that water is split off by the esterification, plus 16 g/mol minus 2 g/mol, considering that in the average arithmetically one -CO- unit per structural element was formed from the respective $-CH_2-$ unit. In case of the structural element of formula (I), it is exactly one per structural element, in case of a combination of structural elements of formula (II) and (III), it is two and zero leading also to one in the average. Second, the number of the structural units was reduced by 1 to consider that each ester group in the polyalkylene oxide ester polymer of the examples connects two structural elements, so that there is one structural element more than ester groups.

The above-mentioned estimation is specifically explained for example 12. The number average molecular weight $M_n$ of the polyalkylene oxide ester polymer was 2400 g/mol, leading to a value of 2382 g/mol. The average molecular weight of the esterified structural elements was (400 - 4) g/mol = 396 g/mol. This leads to an average number of structural units of 2382/396 = 6.0 and consequently to an average number of ester groups of 5.0, or expressed in a mathematical equation

$$\frac{(2400-18)}{(400-4)} - 1 = 5.0$$

.

The number of the ether groups in the polyalkylene oxide ester polymers, which were based on the use of partially oxidized polyethylene oxides (relating to a ratio of the oxidized OH groups of around 50%), was estimated as follows. First, the number of the ethylene oxide units in the used polyethylene oxide was calculated by dividing (1) the molecular average molecular weight $M_w$ of the used polyethylene oxide minus 18 g/mol, considering the end groups formally formed by the addition of one molecule of water per polyethylene oxide molecule during the polymerization, (2) by 44 g/mol which is the molecular weight of a $-CH_2CH_2-O-$ unit. Second, the number of the ethylene oxide units was reduced by 1 to consider that each polyethylene oxide has one ether group less than the number of the ethylene oxide units. The result is the average number of the ether groups in the polyethylene oxide. Third, this number was then multiplied with the number of the structural units in the polyalkylene oxide ester polymers, which was calculated as described above.

The above-mentioned estimation is specifically explained for example 12. The molecular average molecular weight $M_w$ of the used polyethylene oxide was 400 g/mol leading to a value of 382 g/mol. Its division by 44 g/mol leads to a number of 8.7 $-CH_2CH_2-O-$ units, which at the end lead to an average of 7.7 ether units in the polyethylene oxide. Since the average number of the structural units in the polyalkylene oxide ester polymer was estimated above as 6.0, the average number of the ether groups in the polyalkylene oxide ester polymer was 46, or expressed in a mathematical equation

$$\left[\frac{400-18}{44} - 1\right] \times \frac{2400-18}{400-4} = 46$$

.

In the examples which were based on the use of fully oxidized polyethylene oxides (relating to a ratio of the oxidized OH groups of around 95 to 100%) and therefore required the addition of a diol as second component, the number of the ester groups and ether groups was estimated in a similar way as described above with the main difference that the molecular average molecular weight $M_w$ of the used polyethylene oxides in the calculation was the arithmetic mean value between the molecular average molecular weight $M_w$ of the polyalkylene oxide used in the oxidation and the molecular average molecular weight $M_w$ of the polyalkylene oxide used as diol component. This approach is based on the simplified assumption that both structural units have been equally distributed in the polyalkylene oxide ester polymers.

This modified estimation is specifically explained for example 14, in which polyethylene oxide with $M_w$ = 600 g/mol was nearly fully oxidized and polyethylene oxide with $M_w$ = 1500 g/mol used as diol component. The mathematical

equation for the estimation of the ester groups is

$$\frac{4100-18}{[(600+1500)\times 0.5]-4}-1=2.9$$

and for the estimation of the ether groups

$$\left\{\frac{[(600+1500)\times 0.5]-18}{44}-1\right\}\times\frac{4100-18}{[(600+1500)\times 0.5]-4}=88$$

All polyalkylene oxide ester polymers obtained in examples 11 to 21 show a biodegradability in the range of 73 to 89% after 28 days, measured as $CO_2$ formation relative to the theoretical value, although the weight average molecular weight $M_w$ covers 4 050 to even 18 300 g/mol. In contrast to that the biodegradability of a conventional polyethylene oxide with $M_w$ = 8720 g/mol, measured by its $CO_2$ formation within 28 days, is only very poor with a value of 16% although its $M_w$ value is well below 10 000 g/mol.

Examples 23 to 29

In examples 23 to 29, the property of the polyalkylene oxide ester polymers obtained by examples 16 to 21 as a carrier for scents was investigated and compared with a conventional PEG 9000 sample.

9 g of the respective polymer (details see table 3) were molten at 60°C and mixed with 1 g of a mint fragrance mixture (boiling point: 207-228°C). The molten mixture was dropped onto a cold plate to obtain pellets with a weight of around 40 mg. The theoretical content of the mint fragrance directly after the preparation of the pellets was 10 wt.-% and was also analytically determined by gas chromatography. The pellets were then stored for 12 weeks all together at 40°C in a drying cabinet and the content of the mint fragrance again analytically determined by gas chromatography. The results are shown in table 3.

The experiments show that the amount of the mint fragrance in the pellets prepared with the polyalkylene oxide ester polymers is still in the range of 2.3 to 3.0 wt.-%, whereas it is only 2.2 wt.-% for the conventional PEG 9000 polymer. The higher scent retention of the polyalkylene oxide ester polymers enables either the use of a smaller amount of fragrance for a defined life time or a longer life time of the fragrance pellets.

In addition to that, the used polyalkylene oxide ester polymers are significantly better biodegradable than the conventional PEG 9000 polymer, leading to a biodegradation degree of high 73 to 79% for the polyalkylene oxide ester polymers and very low 16% for the conventional PEG 9000 polymer.

Table 1 Examples 1 to 10

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Type[#1] and molecular average molecular weight $M_w$ [g/mol] of polyalkylene oxide | | EO<br>200 | EO<br>400 | EO<br>600 | EO<br>600 | EO<br>1000 | EO<br>1000 | EO<br>1500 | EO<br>1500 | EO<br>2000 | EO<br>2000 |
| Number average of number of ether groups | | 3-4 | 8 | 12 | 12 | 21 | 21 | 33 | 33 | 44 | 44 |
| Amount of polyalkylene oxide [g] | | 1500 | 1500 | 1500 | 1500 | 1500 | 1500 | 1500 | 1500 | 1500 | 1500 |
| Amount of water [g] | | 3500 | 3500 | 3500 | 3500 | 3500 | 3500 | 3500 | 3500 | 3500 | 3500 |
| Oxidation time [h] | | 6 | 6,5 | 35 | 8,5 | 45 | 10 | 62 | 11 | 85 | 12,5 |
| Ratio in product [%] | diacid | 30 | 25 | 94 | 26 | 97 | 25 | 96 | 24 | 98 | 24 |
| | mono acid | 37 | 50 | 5.8 | 50 | 3.1 | 50 | 3.9 | 50 | 2.0 | 50 |
| | diol [#2] | 28 | 25 | 0.1 | 24 | 0.0 | 25 | 0.0 | 26 | 0.0 | 27 |

(continued)

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Ratio of oxidized OH groups [%]#2 | 48.8 | 49.7 | 97.0 | 51.5 | 98.4 | 49.8 | 98.0 | 49,4 | 99.0 | 48.5 |
| Physical property | liquid | liquid | liquid | liquid | solid | paste | solid | solid | solid | solid |
| Hydroxy number [mg KOH/g] | 231.0 | 117.1 | < 2 | 79.1 | <2 | 48.0 | 2.3 | 32 | <2 | 22.7 |
| Acid number [mg KOH/g] | 268.3 | 136.8 | 173.8 | 91.7 | 106.2 | 54.4 | 70.2 | 37.1 | 51.8 | 26.0 |

#1 EO = polyethylene oxide / EOPOEO = polypropylene oxide with $-CH_2CH_2OH$ end groups
#2 Calculated on basis of the percentages of mono- and diacids

Table 2a Examples 11 to 20

| | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|
| Classification #1 | inv. | inv. | inv. | inv. | inv. | inv. | inv. | inv. | inv. | inv. |
| Educt mixture | Ex. 1 | Ex. 2 | Ex. 3 | Ex. 3 | Ex. 4 | Ex. 5 | Ex. 6 | Ex. 7 | Ex. 8 | Ex. 9 |
| Esterification catalyst #2,3 | 0.2 wt.-% cat 1 | 0.3 wt-% cat 2 | 0.15 wt-% cat 3 | 0.2 wt-% cat 3 | 0.1 wt.-% cat 1 | 0.25 wt-% cat 2 | 0.3 wt-% cat 2 | 0.2 wt.-% cat 1 | 0.15 wt.-% cat 1 | 0.2 wt-% cat 3 |
| Further diol #4 | --- | --- | 550 g PEG 600 | 370 g PEG 1500 | --- | 234 g PEG 400 | --- | 565 g PEG 1500 | --- | 290 g PEG 1000 |
| Reaction time [h] | 5.5 | 6 | 8.5 | 10 | 8.0 | 5.0 | 5.5 | 8 | 5 | 7 |
| K-value | 9.9 | 13.6 | 23.3 | 26.6 | 26.7 | 28.6 | 30.5 | 32 | 29 | 33.5 |
| Physical property | liquid | liquid | liquid | paste | liquid | paste | solid | solid | solid | solid |
| $M_n$ [g/mol] | 1580 | 2400 | 3600 | 4100 | 4350 | 3700 | 4230 | 5150 | 4940 | 6400 |
| $M_w$ [g/mol] | 4050 | 5450 | 10 600 | 13 600 | 14 820 | 14 470 | 13 700 | 16 850 | 16 100 | 18 300 |
| PD (= $M_w/M_n$) | 2.56 | 2.27 | 2.94 | 3.32 | 3.41 | 3.91 | 3.24 | 3.27 | 3.26 | 2.86 |
| Average number of ether groups in polymer#5 | 25 | 46 | 73 | 88 | 89 | 77 | 90 | 112 | 108 | 139 |
| Average number of ester groups in polymer#5 | 7.0 | 5.0 | 5.0 | 2.9 | 6.3 | 4.3 | 3.2 | 2.4 | 2.3 | 3.3 |
| Biodegradation after 28 days according to OECD 301 B [%]#6 | 89 | 86.5 | 80.6 | 82.6 | 83.5 | 79 | 75 | 73 | 76 | 74 |

#1 inv. = inventive / comp. = comparative #2 cat 1 = Ti(IV)-tetraisobutylat / cat 2 = methanesulfonic acid / cat 3 = Zn-octanoate
#3 wt.-% relates to the educt mixture plus water. #4 PEG = polyethylene glycol = polyethylene oxide with two primary OH end groups
#5 Calculated as described in the description of examples 11 to 22.
#6 The percent values relate to the $CO_2$ formation relative to the theoretical value.

Table 2b Examples 21 to 22

| | Ex. 21 | Ex. 22 |
|---|---|---|
| Classification #1 | inv. | comp. |
| Educt mixture #4 | Ex. 10 | PEG 9000 |
| Esterification catalyst #2,3 | 0.2 wt.-% cat 1 | --- |
| Further diol #4 | --- | --- |
| Reaction time [h] | 4.5 | --- |
| K-value | 30.4 | 25,4 |
| Physical property | solid | solid |
| $M_n$ [g/mol] | 5400 | 6830 |
| $M_w$ [g/mol] | 16 630 | 8720 |
| PD (= $M_w/M_n$) | 3.08 | 1.28 |
| Average number of ether groups in polymer#5 | 119 | 203 |
| Average number of ester groups in polymer#5 | 1.7 | --- |
| Biodegradation after 28 days according to OECD 301 B [%]#6 | 79 | 16 |

#1 inv. = inventive / comp. = comparative #2 cat 1 = Ti(IV)-tetraisobutylat / cat 2 = methanesulfonic acid / cat 3 = Zn-octanoate
#3 wt.-% relates to the educt mixture plus water. #4 PEG = polyethylene glycol = polyethylene oxide with two primary OH end groups
#5 Calculated as described in the description of examples 11 to 22.
#6 The percent values relate to the $CO_2$ formation relative to the theoretical value.

Table 3 Examples 23 to 29

| | Ex. 23 | Ex. 24 | Ex. 25 | Ex. 26 | Ex. 27 | Ex. 28 | | Ex. 29 |
|---|---|---|---|---|---|---|---|---|
| Classification #1 | inv. | inv. | inv. | inv. | inv. | inv. | | comp. |
| Carrier polymer#2 | Ex. 16 | Ex. 17 | Ex. 18 | Ex. 19 | Ex. 20 | Ex. 21 | | PEG 9000 |
| $M_n$ [g/mol] | 3700 | 4230 | 5150 | 4940 | 6400 | 5400 | | 6830 |
| Theoretical content of mint fragrance before storage [wt.-%] | 10 | 10 | 10 | 10 | 10 | 10 | | 10 |
| Measured content of mint fragrance before storage [wt.-%] | 9.3 | 9.4 | 9.4 | 9.2 | 9.3 | 9.5 | | 9.2 |
| Measured content of mint fragrance after storage [wt.-%] | 2.3 | 2.6 | 2.6 | 2.9 | 2.7 | 3.0 | | 2.2 |
| Biodegradation of the carrier polymer after 28 days according to OECD 301 B[%] | 79 | 75 | 73 | 76 | 74 | 79 | | 16 |

#1 inv. = inventive / comp. = comparative
#2 PEG = polyethylene glycol = polyethylene oxide with two primary OH end groups

## Claims

1. Polyalkylene oxide ester polymer with a weight average molecular weight $M_w$ of 500 to 50 000 g/mol and a polydispersity PD of 2 to 6, comprising 10 to 560 ether groups and 2 to 51 ester groups, which are interconnected with alkylene groups, wherein the polyalkylene oxide ester polymer contains 1 to 51 structural elements of the general formula (I)

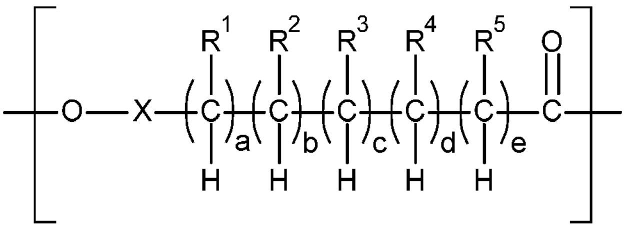

(I)

in which

- the -O- unit at the left side is bound to a -CO- unit of an adjacent unit of the polymer, forming an ester unit,
- the -CO- unit at the right side is bound to a -O- unit of an adjacent unit of the polymer, forming a further ester unit,
- $R^1$, $R^2$, $R^3$, $R^4$, $R^5$ represent independent of each other a hydrogen atom or a $C_{1-12}$ alkyl group,
- a, b, c, d, e represent independent of each other an integer of 0 or 1, whereas the sum of a to e is 1 to 5, and
- X represents a polyalkylene oxide unit with 4 to 100 alkylene oxide units, whereby the alkylene oxide units contain independent of each other 2 to 6 carbon atoms in the direct chain between two -O- units, whereby each of the carbon atoms in the direct chain between two -O- units contain independent of each other either two hydrogen atoms, or one hydrogen atom and one $C_{1-12}$ alkyl group.

**2.** Polyalkylene oxide ester polymer according to claim 1, wherein

- $R^1$ represents a hydrogen atom or a methyl group,
- $R^2$, $R^3$ represent a hydrogen atom,
- d, e are 0,
- a is 1,
- b, c represent an integer of 0 or 1, whereas the sum of b to c is 0 or 2, and
- X represents a polyalkylene oxide unit with 4 to 100 alkylene oxide units, whereby the alkylene oxide units are independent of each other and contain 2 or 4 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the other one or three carbon atoms two hydrogen atoms each, whereby each -O- unit carries not more than one methyl group carrying carbon atom in $\alpha$-position.

**3.** Polyalkylene oxide ester polymer according to claim 1, wherein

- $R^1$ represents a hydrogen atom or a methyl group,
- b, c, d, e are 0,
- a is 1, and
- X represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in $\alpha$-position to an -O- unit contain either two hydrogen atoms, or one hydrogen atom and one methyl group, and the other carbon atom two hydrogen atoms, whereby each -O- unit carries not more than one methyl group carrying carbon atom in $\alpha$-position.

**4.** Polyalkylene oxide ester polymer according to any of claims 1 to 3, wherein the ratio of the number of ether groups to the number of ester groups is 4 to 100.

**5.** Polyalkylene oxide ester polymer according to any of claims 1 to 4, wherein it contains 1 to 25 structural elements of the general formula (II)

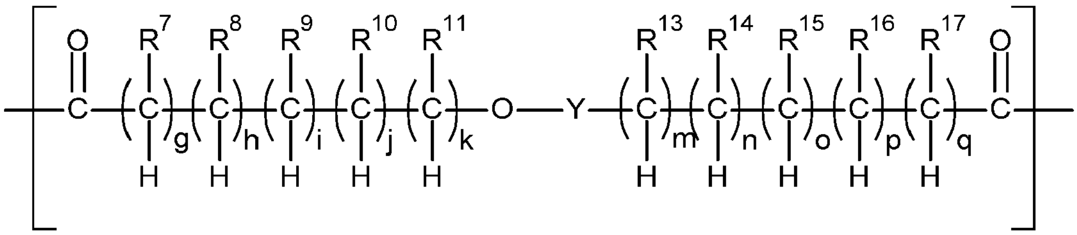

(II)

in which

- the -CO- unit at the left side is bound to a -O- unit of an adjacent unit of the polymer, forming an ester unit,
- the -CO- unit at the right side is bound to a -O- unit of an adjacent unit of the polymer, forming a further ester unit,
- $R^7$, $R^8$, $R^9$, $R^{10}$, $R^{11}$, $R^{13}$, $R^{14}$, $R^{15}$, $R^{16}$, $R^{17}$ represent independently of each other a hydrogen atom or a $C_{1-12}$ alkyl group,
- g, h, i, j, k, m, n, o, p, q represent independent of each other an integer of 0 or 1, whereas the sum of g to k is 1 to 5, and the sum of m to q is 1 to 5, and
- Y represents a polyalkylene oxide unit with 0 to 99 alkylene oxide units, whereby the alkylene oxide units contain independent of each other 2 to 6 carbon atoms in the direct chain between two ether groups, whereby each of the carbon atoms in the direct chain between two ether groups contain independent of each other either two hydrogen atoms, or one hydrogen atom and one $C_{1-12}$ alkyl group,

and polyalkylene oxide units of the general formula (III) in a number suitable to form ester bonds with the -CO- units of the structural elements of the formulas (I) and (II)

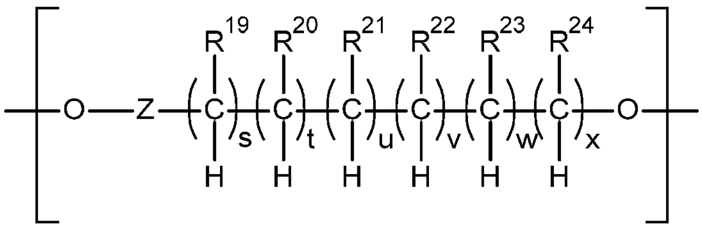

(III)

in which

- the -O- unit at the left side is bound to a -CO- unit of an adjacent unit of the polymer, forming an ester unit,
- the -O- unit at the right side is bound to a -CO- unit of an adjacent unit of the polymer, forming a further ester unit,
- $R^{19}$, $R^{20}$, $R^{21}$, $R^{22}$, $R^{23}$, $R^{24}$ represent independently of each other a hydrogen atom or a $C_{1-12}$ alkyl group,
- s, t, u, v, w, x represent independent of each other an integer of 0 or 1, whereas the sum of s to x is 2 to 6, and
- Z represents a polyalkylene oxide unit with 0 to 100 alkylene oxide units, whereby the alkylene oxide units are independent of each other and contain 2 to 6 carbon atoms in the direct chain between two ether groups, whereby each of the carbon atoms in the direct chain between two ether groups contain independent of each other either two hydrogen atoms, or one hydrogen atom and one $C_{1-12}$ alkyl group,

with the proviso that, together with the structural elements of the formula (I), the total number of the ester groups does not exceed the maximum number of the ester groups specified for the polyalkylene oxide ester polymer.

**6.** Polyalkylene oxide ester polymer according to any of claims 1 to 5, wherein

- $R^{13}$, $R^{19}$ represent independent of each other a hydrogen atom or a methyl group,
- $R^9$, $R^{10}$, $R^{11}$, $R^{14}$, $R^{15}$, $R^{20}$, $R^{21}$, $R^{24}$ represent a hydrogen atom,
- g, h, p, q, v, w are 0,
- k, m, s, x are 1,
- i, j, n, o, t, u represent independent of each other an integer of 0 or 1, whereas the sum of i to j is 0 or 2, the sum of n to o is 0 or 2, and the sum of t to u is 0 or 2, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and

contain 2 or 4 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the remaining other one or three carbon atoms two hydrogen atoms each, whereby each -O- unit carries not more than one methyl group carrying carbon atom in α-position.

**7.** Polyalkylene oxide ester polymer according to any of claims 1 to 6, wherein

- $R^{13}$, $R^{19}$ represent independent of each other a hydrogen atom or a methyl group,
- $R^9$, $R^{10}$, $R^{11}$, $R^{14}$, $R^{15}$, $R^{20}$, $R^{21}$, $R^{24}$ represent a hydrogen atom,
- g, h, i, j, n, o, p, q, t, u, v, w are 0,
- k, m, s, x are 1, and
- Y represents a polyalkylene oxide unit with 3 to 99 alkylene oxide units, and Z represents a polyalkylene oxide unit with 4 to 100 alkylene oxide units, whereby the alkylene oxide units are independent of each other and contain 2 carbon atoms in the direct chain between two ether groups, whereby in each alkylene oxide unit, and independent of each other, one of the carbon atoms in α-position to an -O- unit contain either two hydrogen atoms, or one hydrogen atom and one methyl group, and the remaining other carbon atom two hydrogen atoms, whereby each -O- unit carries not more than one methyl group carrying carbon atom in α-position.

**8.** Polyalkylene oxide ester polymer according to any of claims 1 to 7, wherein the ratio of the number of the structural elements (I) to the number of the structural elements (II) is 0.5 to 8.

**9.** Polyalkylene oxide ester polymer according to any of claims 1 to 8, wherein the structural elements (I), (II) and (III) constitute 80 to 100% of the molecular weight of the polyalkylene oxide ester polymer.

**10.** A process for the preparation of a polyalkylene oxide ester polymer according to any of claims 1 to 4, which comprises esterifying polyalkylene oxide comprising the structural element (I) and having one primary OH and one COOH end group, or a mixture of such polyalkylene oxides, at a temperature of 50 to 250°C and a pressure of 0.1 kPa abs to 1 MPa abs in the presence of an esterification catalyst.

**11.** A process for the preparation of a polyalkylene oxide ester polymer according to any of claims 1 to 9, which comprises esterifying a mixture comprising

a) a polyalkylene oxide comprising the structural element (I) and having one primary OH and one COOH end group, or a mixture of such polyalkylene oxides,
b) a polyalkylene oxide comprising the structural element (II) and having two COOH end groups, or a mixture of such polyalkylene oxides, and
c) a polyalkylene oxide comprising the structural element (III) and having two primary OH end groups, or a mixture of such polyalkylene oxides,

at a temperature of 50 to 250°C and a pressure of 0.1 kPa abs to 1 MPa abs in the presence of an esterification catalyst.

**12.** The process according to claim 11, wherein the ratio of the number of the OH end groups to the number of the COOH end groups is 0.9 to 1.1.

**13.** The process according to any of claims 10 to 12, wherein the polyalkylene oxide comprising the structural element (I) and having one primary OH and one COOH end group, or a mixture of such polyalkylene oxides, has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold.

**14.** The process according to claim 11, wherein the mixture of the components a) to c) has been produced by partial oxidation of the respective polyalkylene oxide having two primary OH end groups, or a mixture of such polyalkylene oxides, with oxygen at a temperature of 20 to 100°C and a partial oxygen pressure of 0.01 to 2 MPa abs in the presence of water and a heterogeneous catalyst comprising platinum, palladium or gold, and the oxidation reaction been stopped after a ratio of the number of the OH end groups to the number of the COOH end groups in the range of 0.9 to 1.1 has been reached.

15. The use of the polyalkylene oxide ester polymer process according to any of claims 1 to 9 for the encapsulation of fragrances and as building blocks for the preparation of block polymers.

Europäisches Patentamt
European Patent Office
Office européen des brevets

# EUROPEAN SEARCH REPORT

Application Number
EP 21 18 0239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LARS VAN DER MEE ET AL: "Oxo-crown-ethers as comonomers for tuning polyester properties", JOURNAL OF POLYMER SCIENCE PART A: POLYMER CHEMISTRY, JOHN WILEY & SONS, INC, US, vol. 44, no. 7, 1 April 2006 (2006-04-01), pages 2166-2176, XP002635692, ISSN: 0887-624X, DOI: 10.1002/POLA.21329 [retrieved on 2006-02-14] * the whole document * ----- | 1-15 | INV. C08G63/672 C08G63/78 C08G63/664 |
| A | EP 2 611 853 A1 (BASF SE [DE]) 10 July 2013 (2013-07-10) * example 1 * ----- | 1-15 | |
| A | EP 3 502 162 A1 (COVESTRO DEUTSCHLAND AG [DE]) 26 June 2019 (2019-06-26) * table 1 * ----- | 1-15 | |
| X | WO 96/36656 A1 (DOW CHEMICAL CO [US]; NACE VAUGHN MARK [US]) 21 November 1996 (1996-11-21) | 1-4,10, 15 | TECHNICAL FIELDS SEARCHED (IPC) |
| A | * Examples; claim 1 * ----- | 5-9, 11-14 | C08G |

The present search report has been drawn up for all claims

1

| Place of search | Date of completion of the search | Examiner |
|---|---|---|
| The Hague | 9 November 2021 | Hoffmann, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 18 0239

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2021

| Patent document cited in search report | Publication date | Patent family member(s) | Publication date |
|---|---|---|---|
| EP 2611853 A1 | 10-07-2013 | BR 112013003891 A2 | 12-07-2016 |
| | | CN 103154084 A | 12-06-2013 |
| | | EP 2611853 A1 | 10-07-2013 |
| | | JP 5731651 B2 | 10-06-2015 |
| | | JP 2013536286 A | 19-09-2013 |
| | | KR 20130102051 A | 16-09-2013 |
| | | RU 2013112098 A | 27-09-2014 |
| | | SG 188244 A1 | 30-04-2013 |
| | | US 2013211041 A1 | 15-08-2013 |
| | | WO 2012022048 A1 | 23-02-2012 |
| EP 3502162 A1 | 26-06-2019 | CN 111479846 A | 31-07-2020 |
| | | EP 3502162 A1 | 26-06-2019 |
| | | EP 3728397 A1 | 28-10-2020 |
| | | US 2020317860 A1 | 08-10-2020 |
| | | WO 2019121205 A1 | 27-06-2019 |
| WO 9636656 A1 | 21-11-1996 | AT 201221 T | 15-06-2001 |
| | | AU 5666996 A | 29-11-1996 |
| | | DE 69612848 T2 | 30-08-2001 |
| | | DK 0826012 T3 | 27-08-2001 |
| | | EP 0826012 A1 | 04-03-1998 |
| | | ES 2156278 T3 | 16-06-2001 |
| | | TW 338050 B | 11-08-1998 |
| | | US 5525702 A | 11-06-1996 |
| | | WO 9636656 A1 | 21-11-1996 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 110498915 A
- US 2585448 A
- JP 55143981 A
- US 20110207634 A
- WO 2001012203 A
- US 6147168 A
- US 6224894 B
- EP 0771832 A
- EP 0771849 A
- US 6310235 B
- US 5324 A
- US 853 A
- US 2020017745 A

### Non-patent literature cited in the description

- **Y. NAKATSUJI et al.** *Synthesis,* 1981, 42-44
- **L. VAN DER MEE et al.** *J. Polymer Sci. Part A, Polymer Chem.,* 2006, vol. 44 (7), 2166-2176